# EUROPEAN PATENT APPLICATION

(11) **EP 4 400 523 A1**
(43) Date of publication of application: **17.07.2024**
(21) Application number: 23150832.6
(22) Date of filing: 10.01.2023
(51) Int. Cl.: C08G 18/08, C08G 18/12, C08G 18/34, C08G 18/40, C08G 18/42, C08G 18/44, C08G 18/62, C08G 18/65, C08G 18/67, C08G 18/75, C09D 175/04, C08F 220/06, C08F 283/00, C09D 175/14, C09D 175/16, C09D 175/02

(54) **AQUEOUS POLYURETHANE-VINYL POLYMER HYBRID DISPERSION**

(71) Applicant: Allnex Austria GmbH, 8402 Werndorf (AT)
(72) Inventor: HOFSTADLER, Petra, 8323 St. Marein / Graz (AT); STEINER, Andreas J., 8041 Graz (AT); ROMMENS, Jessica Magdalena Johanna, 4611 SW Bergen op Zoom (NL)
(74) Representative: Allnex Austria GmbH

(57) **Abstract**

The present invention relates to an aqueous polyurethane-vinyl polymer hybrid dispersion comprising a polyurethane-vinyl polymer hybrid having pendant acid salt groups and end-standing carbonyl groups, and optionally a multifunctional compound having functional groups reactable with the carbonyl groups of the polyurethane-vinyl polymer hybrid. The present invention also relates to a method for the preparation of said aqueous dispersion; to a water borne coating formulation (or aqueous coating composition) comprising said dispersion, for application and curing on a broad range of substrates; and to a substrate coated with the coating composition.

## Description

### Field of the Invention

The present invention relates to an aqueous polyurethane-vinyl polymer hybrid dispersion prepared by free radical polymerisation of ethylenically unsaturated monomers, polyurethane prepolymers containing pedant acid salt groups and end-standing carbonyl groups, and optionally a multifunctional compound having functional groups reactable with the carbonyl groups of the polyurethane prepolymers. The present invention also relates to a method for the preparation of said aqueous dispersion; to a water borne coating formulation (or aqueous coating composition) comprising said dispersion, for application and curing on a broad range of substrates, particularly for the application and curing on wood; and to a substrate coated with the coating composition.

### Background Art

Aqueous polyurethane dispersions containing carbonyl groups have been known in the art.

US 5,147,926 discloses a crosslinkable aqueous polyurethane dispersion having a long shelf life which comprises:
A) polyurethanes which have carbonyl groups, are dispersed in water in the presence of ammonia or of organic amines and are obtained by reacting
   a) organic polyisocyanates with
   b) compounds which contain one or more active hydrogen atoms and one or more salt groups or one or more groups capable of salt formation and
   c) carbonyl-containing mono- and/or polyalcohols, selected from hydroxyacetone, hydroxybenzaldehyde, acetoin, benzoin or a mixture, and
B) polyhydrazides.
In US 5,147,926 suitable carbonyl-containing mono- and/or polyalcohols c) described are, for example, hydroxyacetone, hydroxybenzaldehyde, acetoin and benzoin. Adducts of diepoxides, such as 2,2-bis-(4-hydroxyphenyl)-propane (bisphenol A) and ketocarboxylic acids, such as pyruvic acid and levulinic acid, are also described as suitable. Other suitable components c) described are ketocarboxylates which are obtainable by partial esterification of ketocarboxylic acids with polyalcohols or by partial transesterification of ketocarboxylates with polyalcohols (partial esters). These esters also have one or more, preferably two, hydroxyl groups.

DE 196 47 982 A1 discloses an aqueous dispersion which comprises a polyurethane polymer with structural units containing keto- and amide groups. For example, N-(2-hydroxyethyl)acetoacetamide is described to react in MEK with
a) polyester polyol made of adipic acid, isophthalic acid and 1,6-hexandiol,
b) dimethylolpropionic acid,
c) 1,4-butandiol, and
d) isophorondiisocyanate.
The so formed polyurethane prepolymer in DE 196 47 982 A1 was neutralized with triethylamine, dispersed in water and subsequently diethylentriamine added to the dispersion. After removal of process solvent the dispersion had a solids content of 34,9 % and a pH value of 7,6.

US 2007093594 (A1) discloses self-crosslinking aqueous polyurethane dispersions containing a crosslinking agent selected from diamines and dihydrazides, and polyurethanes comprising structural elements derived from polyisocyanates A, polyols B having a number average molar mass Mₙ of at least 400 g/mol, compounds D comprising at least two groups which are reactive towards isocyanate groups and at least one group able to form anions, low-molecular polyols E that carry no further groups which are reactive towards isocyanate groups, compounds F containing at least one group which is reactive towards isocyanate, and at least one aldehyde-type or ketone-type carbonyl group, and compounds G which are monofunctional with respect to isocyanates or contain active hydrogen with different capability of reaction and which are different from compounds E. As a suitable compound F 3-acetyl-1-propanol is presented.

EP 0332326 (A2) discloses an aqueous selfcrosslinkable coating composition comprising an aqueous dispersion which comprises at least one polyurethane polymer, wherein said composition has hydrazine (or hydrazone) functional groups and carbonyl functional groups present in the composition to provide a selfcrosslinking reaction, in which said at least one polyurethane polymer takes part, via azomethine formation from the reaction of hydrazine (or hydrazone) functional groups and carbonyl functional groups during and/or after film formation from the aqueous composition.

WO 2006086322 (A1) and US 2006264568 (A1) disclose an aqueous dispersion of polyurethane comprising:
a) a urethane polymer of at least 2000 Dalton number average molecular weight;
b) a ketone functional molecule(s) having a number average molecular weight of less than 2000 Daltons having at least one ketone functional moiety;
c) at least one molecule of number average molecular of less than 2000 Daltons having at least one hydrazine moiety co-reactive with said ketone function moiety; and
d) water.
For the urethane polymer, comprising ketone functional moiety(s), said ketone functional moieties are incorporated in said polyurethane through reaction of a diisocyanate with the reaction product of levulinic acid and a diglycidylether of bisphenol A, generating a polyurethane comprising chain pendant ketone functions (ketone functions pendant (or attached) to the polyurethane backbone).

### Aim of the invention

The present invention aims to provide aqueous coating compositions for application on a broad range of substrates, particularly for the application on wood, that meet the demands of the coating industry.

It is the aim of the present invention to provide aqueous coating compositions with a low content of organic co-solvent which, upon application (and curing), result in coatings having good gloss combined with improved blocking resistance and water resistance properties compared to state-of-the-art products in the market.

### Summary of the invention.

According to an aspect of the present invention, there is therefore provided an aqueous polyurethane-vinyl polymer hybrid dispersion, as set out in the appended claims.

According to another aspect of the invention, there is provided a method for the preparation of said aqueous polyurethane-vinyl polymer hybrid dispersion, as set out in the appended claims.

According to other aspects of the invention, a coating composition comprising the aqueous polyurethane-vinyl polymer hybrid dispersion, a substrate coated with the coating composition, and use of the coating composition are provided as well, as set out in the appended claims.

Advantageous aspects of the present invention are set out in the (dependent) claims and are further discussed in the description below.

### Detailed Description of the invention.

The present invention provides an aqueous polyurethane-vinyl polymer hybrid dispersion **D** comprising a polyurethane-vinyl polymer hybrid **A** having (one or more) pendant acid salt groups and (one or more) end-standing carbonyl groups, said dispersion **D** optionally further comprising a multifunctional compound **B** having functional groups reactable with the carbonyl groups of the polyurethane-vinyl polymer hybrid **A.**

Said polyurethane-vinyl polymer hybrid **A** is the reaction product of:
- an isocyanate functional polyurethane prepolymer **A1** comprising (one or more) (pendant) acid groups; and
- from 50 to 100 moles of a carbonyl functional building block **A2,** for 100 isocyanate equivalents of the isocyanate functional polyurethane prepolymer **A1;** and
- (optionally) from 0 to 50 moles of a primary amine **A22,** for 100 isocyanate equivalents of the isocyanate functional polyurethane prepolymer **A1,** said primary amine **A22** being selected from the group consisting of alkylamines, alkanol amines and mixtures thereof; and
- one or more ethylenically unsaturated monomer(s) **MU1** having at least one polymerisable ethylenic unsaturation; and
- one or more acid neutralizing compound(s) **N.**

Said carbonyl functional building block **A2** is bound to one or more extremity/extremities of the polyurethane prepolymer **A1,** resulting in a polyurethane-vinyl polymer hybrid **A** comprising (one or more) end-standing carbonyl groups.

In the context of the present description, "carbonyl group(s)" refers to carbonyl group(s) of the ketone and/or aldehyde type.

In the context of the present description, the polyurethane prepolymer **A1** constitutes the backbone of the polyurethane-vinyl polymer hybrid **A** (the polyurethane prepolymer **A1** also being referred to as polyurethane prepolymer backbone or prepolymer backbone). The prepolymer backbone can be linear or branched, preferably linear.

Preferably, the polyurethane-vinyl polymer hybrid **A** of the present invention is substantially free of pendant carbonyl groups, i.e. the polyurethane-vinyl polymer hybrid comprises less than 5 mole %, more preferably less than 4 mole %, even more preferably less than 3 mole %, most preferably less than 2 mole %, even most preferably less than 1 mole %, yet even most preferably 0 mole % of pendant carbonyl groups, relative to the total amount of carbonyl groups present in polyurethane-vinyl polymer hybrid **A**, wherein pendant carbonyl groups refer to carbonyl group comprising molecular entities bound to its backbone at locations situated along the entire (linear or branched) backbone but not at the extremities thereof (i.e. in case of a branched backbone, the pendant carbonyl groups can thus also be bound to the branches thereof, but not at the extremity of the branches).

In the context of the description, total amount of carbonyl groups present in polyurethane-vinyl polymer hybrid **A** refers to the total sum of carbonyl groups in hybrid **A** originating from **MU1**, pending carbonyl groups from the prepolymer **A1** and end-standing carbonyl groups from **A2.**

More preferably, the backbone of polyurethane-vinyl polymer hybrid **A** comprises no pendant carbonyl groups and comprises only (one or more) end-standing carbonyl groups.

Preferably, polyurethane-vinyl polymer hybrid **A** comprises an end-standing carbonyl group at least at one of the extremities of its backbone. More preferably, polyurethane-vinyl polymer hybrid **A** comprises an end-standing carbonyl group at all the extremities of its backbone. Most preferably, polyurethane prepolymer **A1** is a linear polyurethane and the (linear) backbone of polyurethane-vinyl polymer hybrid **A** comprises a carbonyl group at both of the extremities of its backbone.

In addition to the carbonyl groups bound to one or more extremity/extremities of the polyurethane prepolymer **A1** by (or using) carbonyl functional building block **A2,** the polyurethane-vinyl polymer hybrid **A** can optionally further comprise carbonyl groups originating from ethylenically unsaturated monomer(s) **MU1** (e.g. in case keto-functional ethylenically unsaturated monomers are being used as part of the monomers **MU1**).

Said polyurethane-vinyl polymer hybrid **A,** in its solid unneutralized form, is characterized by a carbonyl content (originating from carbonyl functional building block **A2**) of more than 150 mmole/kg, preferably more than 250 mmole/kg, more preferably more than 350 mmole/kg and most preferably more than 400 mmole/kg. The carbonyl content is thereby calculated by dividing the total number of carbonyl-groups originating from carbonyl functional building block **A2** by the total weight of polyurethane-vinyl polymer hybrid **A,** in its solid unneutralized form.

In the present invention, polyurethane-vinyl polymer hybrid **A,** in its solid unneutralized form, should be understood as:
- unneutralized polyurethane-vinyl polymer hybrid **A:**
   polyurethane-vinyl polymer hybrid **A** wherein the acid group (or the group being able to form an acid when contacted with water) of monomeric compounds **ICMA** are not converted into anionic dispersant groups, by the addition of one or more neutralizing compounds **N.** In its unneutralized form, polyurethane-vinyl polymer hybrid **A** comprises pendant acid groups or pendant acid group precursors;
- solid polyurethane-vinyl polymer hybrid **A:**
   polyurethane-vinyl polymer hybrid **A,** wherein deionized water, added, together with the carbonyl functional building block **A2,** for the preparation of carbonyl-terminated unneutralized polyurethane **A,** is not taken into account.

Preferably the carbonyl functional building block **A2** for forming polyurethane-vinyl polymer hybrid **A** contains at least one group which is reactive towards isocyanate, and at least one carbonyl group of the ketone and/or aldehyde type.

Preferably, the at least one carbonyl group of **A2** is bound to the polymer chain in the polyurethane (i.e. to the prepolymer backbone) by means of a divalent group -X-, wherein the group -X- is preferably selected from the group consisting of linear, and branched, and cyclic alkylene groups and aralkylene groups each having at least 2, preferably 3 to 20, carbon atoms, wherein the two binding sites must not be on the same C atom. The at least one group which is reactive towards isocyanate contained in **A2** can be bound to an aromatic carbon atom (e. g. a phenolic hydroxyl group), or preferably to an aliphatic carbon atom, of **A2.**

The group -X- is preferably a 1,2-, 1,3- or 1,4-alkylene radical having the structure -CR¹R²-CR³R⁴-; -CR¹R²-CR³R⁴-CR⁵R⁶-; -CR¹R²-CR³R⁴-CR⁵R⁶-CR⁷R⁸-, wherein the radicals R¹ to R⁸ can be mutually different or the same and can also be bonded together in such a way that a cyclic structure is formed; linear structures are preferred, however, for example groups of the type -CH₂-CH₂-; -CH₂-CH₂-CH₂-; and -CH₂-CH₂-CH₂-CH₂-.

More preferably, carbonyl functional building block **A2** is selected from the group consisting of 1-(4-hydroxyphenyl)-3-butanone, 3-acetyl-1-propanol, 2-acetyl-1-ethanol, 4-acetyl-1-butanol, 2,2-dimethyl-3-hydroxy-propionaldehyde and dihydro-5-hydroxymethyl-2(3H)-furanone and mixtures thereof.

The at least one group which is reactive towards isocyanate contained in **A2** is preferably selected from hydroxyl, amine and mercaptan groups and mixtures thereof. In case that more than one group which is reactive towards isocyanate is contained in carbonyl functional building block **A2,** these groups preferably have different reactivities towards isocyanate. More preferable carbonyl functional building block **A2** contains one amine group and at least one hydroxyl group, most preferably one amine group and one hydroxyl group.

Alternatively and most preferably the carbonyl functional building block **A2** comprises secondary amine groups of the formula R¹-NH-R², wherein R¹ is an alkyl or an hydroxyalkyl moiety, and wherein R² is a molecular entity comprising a carbonyl group, and said carbonyl functional building block **A2** is the reaction product of an alpha, beta ethylenically unsaturated group comprising compound comprising a carbonyl group **A21** and (with) a primary amine **A22,** said primary amine **A22** being selected from the group consisting of C1-C6 alkylamines, C1-C6 alkanolamines and mixtures thereof.

In case the primary amine **A22** is a C1-C6 alkylamine, it is preferably selected from the group consisting of methylamine, ethylamine, n-propylamine, isopropylamine, n-butylamine, iso-butylamine, sec-butylamine, n-amylamine, isoamylamine, n-hexylamine, 2-aminohexane, iso-hexylamine, 3,3-dimethyl-2-butanamine, 2-amino-4-methylpentane, 3,3-dimethylbutylamine, 3,3-dimethyl-2-butylamine, 1-amino-2-ethyl-n-butane, 3-amino-3-methylpentane and mixtures thereof. More preferably, in this case, the primary amine **A22** is selected from the group consisting of one or more structures of the formula CH₃-(CH₂)n-NH₂ wherein n is an integer of from 1 to 5 (or of the formula H-(CH₂)n-NH₂ wherein n is an integer of from 1 to 6); most preferably the primary amine **A22** is n-butylamine.

In case the primary amine **A22** is a C1-C6 alkanolamine, it is preferably selected from the group consisting of methanolamine, ethanolamine, 3-amino-1-propanol, 3-amino-2-propanol, 1-amino-2-propanol, 4-amino-1-butanol, 3-amino-1-butanol, 2-amino-1-butanol, 2-amino-2-methyl-1-propanol, 5-amino-1-pentanol, 4-amino-1-pentanol, 3-amino-1-pentanol, 2-amino-1-pentanol, 5-amino-2-pentanol, 4-amino-2-pentanol, 3-amino-2-pentanol, 1-amino-3-pentanol 2-amino-3-pentanol, 4-amino-2-methyl-1-butanol, 4-amino-3-methyl-1-butanol, 2-amino-3-methyl-1-butanol, 4-amino-2-methyl-2-butanol, 3-amino-2,2-dimethyl-1-propanol, 6-amino-1-hexanol, 2-amino-1-hexanol, 3-amino-1-hexanol, 6-amino-3-hexanol, 2-amino-3-methylpentan-1-ol, and mixtures thereof. More preferably, in this case, the primary amine **A22** is selected from the group consisting of one or more structures of the formula HO-(CH₂)n-NH₂ wherein n is an integer of from 1 to 6; most preferably the primary amine **A22** is ethanolamine.

The alpha, beta ethylenically unsaturated group comprising compound comprising a carbonyl group **A21** is preferably selected from the group consisting of acrolein, methacrolein, diacetone-acrylamide, 2-acetoacetoxyethyl (meth)acrylate, crotonaldehyde, 4-vinylbenzaldehyde, vinyl alkyl ketones of 4 to 7 carbon atoms (such as vinyl methyl ketone), and acryloxy- and methacryloxy-alkyl propanols of formula:

CH₂=CHR³-C=O-O-CHR⁴-CR⁵R⁶-C=O-R⁷,

where R³ is H or methyl, R⁴ is H or alkyl of 1 to 3 carbon atoms, R⁵ is alkyl of 1 to 3 carbon atoms, R⁶ is alkyl of 1 to 4 carbon atoms, R⁷ is H or alkyl of 1 to 3 carbon atoms.

More preferably the alpha, beta ethylenically unsaturated group comprising compound comprising a carbonyl group **A21** is diacetone-acrylamide and/or 2-acetoacetoxyethyl (meth)acrylate, most preferably diacetone-acrylamide.

As known in the art, the reaction of the primary amine **A22** with the alpha, beta ethylenically unsaturated group comprising compound comprising a carbonyl group **A21** is a Michael addition reaction, wherein **A22** is the Michael donor and **A21** is the Michael acceptor.

Preferably the polyurethane-vinyl polymer hybrid **A** having pendant acid salt groups and end-standing carbonyl groups is the reaction product of
- the isocyanate functional polyurethane prepolymer **A1** comprising acid groups; and
- the secondary amines of carbonyl functional building blocks **A2;** and
- the primary amines of optional compound **A22;** and
- one or more ethylenically unsaturated monomer(s) **MU1** having at least one polymerisable ethylenic unsaturation; and
- one or more acid neutralizing compound(s) **N;**
wherein carbonyl functional building blocks **A2** and optional compounds **A22** are bound to the isocyanate-terminated polyurethane prepolymer **A1** by means of an urea linkage.

More preferably the polyurethane-vinyl polymer hybrid **A** having pendant acid salt groups and end-standing carbonyl groups is the reaction product of
- the isocyanate functional polyurethane prepolymer **A1** comprising acid groups; and
- from 50 to 100 moles, preferably 70 to 99 moles, of secondary amines of carbonyl functional building block **A2;** and
- from 0 to 50 moles, preferably from 1 to 30 moles, of primary amines of optional compound **A22;** and
- one or more ethylenically unsaturated monomer(s) **MU1** having at least one polymerisable ethylenic unsaturation; and
- one or more acid neutralizing compound(s) **N;**
for 100 isocyanate equivalents of the isocyanate functional polyurethane prepolymer **A1.**

Preferably the carbonyl group of the carbonyl functional building block **A2** is of the ketone- or the aldehyde-type.

The amount in % by weight of **MU1** based on the total weight of polyurethane-vinyl polymer hybrid **A,** in its solid unneutralized form, preferably is from 10 to 50% by weight, more preferably from 15 to 45% by weight, even more preferably from 20 to 35% by weight.

The isocyanate functional polyurethane prepolymer **A1** preferably is the reaction product of:
- one or more polyisocyanate(s) **I;**
- one or more isocyanate reactive compound(s) **IC** having at least two isocyanate reactive groups selected from the group consisting of monomeric compounds **ICM,** polymeric compounds **ICP** and mixtures thereof; and
- one or more isocyanate reactive monomer(s) **ICMA** having at least two isocyanate reactive groups and at least one acid group or group being able to form an acid when contacted with water;
wherein isocyanate groups of **I** are in stoichiometric excess of isocyanate reactive groups of **IC** and **ICMA,** thereby forming an isocyanate functional polyurethane prepolymer **A1** characterized by an isocyanate equivalent weight preferably being comprised between 600 and 2,200 g/equiv., more preferably between 800 and 2,000 g/equiv., most preferably between 1,000 and 1,800 g/equiv.

Calculating theoretical values for the isocyanate equivalent weight, as well as the confirmation by titration thereof, is well known to the skilled person in the art and is of general practice.

The isocyanate functional polyurethane prepolymer **A1** more preferably is the reaction product of:
- from 20 to 60% by weight, even more preferably from 30 to 50% by weight, of one or more polyisocyanate(s) **I**;
- from 30 to 80% by weight, even more preferably from 40 to 70% by weight, of one or more isocyanate reactive compound(s) **IC;** and
- from 2 to 20% by weight, even more preferably from 5 to 15% by weight, of one or more isocyanate reactive monomer(s) **ICMA;**
based on the total weight of isocyanate functional polyurethane prepolymer **A1;** the sum of **I, IC** and **ICMA** being 100%.

Preferably the one or more isocyanate reactive compound(s) **IC** having at least two isocyanate reactive groups is a mixture of monomeric compounds **ICM** and polymeric compounds **ICP** with a weight ratio of monomeric compounds **ICM** to polymeric compounds **ICP** of from 0.10 to 0.5, more preferably from 0.2 to 0.4.

The one or more polyisocyanate(s) **I** is (are) preferably selected from the group consisting of aromatic or aliphatic or mixed aliphatic-aromatic isocyanates, and are more preferably selected from the group consisting of trimethylene diisocyanate, tetramethylene diisocyanate, pentamethylene diisocyanate, hexamethylene diisocyanate (HDI), propylene diisocyanate, ethylethylene diisocyanate, 2,3-dimethylethylenediisocyanate, 1-methyltrimethylene diisocyanate, cyclopentylene 1,3-diisocyanate, cyclohexylene 1,4-diisocyanate, cyclohexylene 1,2-diisocyanate, phenylene 1,3-diisocyanate, phenylene 1,4-diisocyanate, 2,4-toluene diisocyanate, 2,6-toluene diisocyanate, biphenylene 4,4'-diisocyanate, bis-(4-isocyanatophenyl)methane (MDI), naphthylene 1,5-diisocyanate, naphthylene 1,4-diisocyanate, 1-isocyanatomethyl-5-isocyanato-1,3,3-tri-methylcyclohexane (isophorone diisocyanate, IPDI), bis-(4-isocyanatocyclohexyl)methane (H12-MDI), 4,4'-diiso-cyanato-diphenyl ether, 2,3-bis-(8-isocyanatooctyl)-4-octyl-5-hexylcyclohexene, trimethylhexamethylene diisocyanates, 1,3-bis(2-isocyanatopropan-2-yl)benzene, meta-tetramethylxylylene diisocyanate (TMXDI), uretdiones of the above diisocyanates, isocyanurates of the above diisocyanates, and allophanates of the above diisocyanates, and mixtures thereof.

In case polyisocyanate(s) **I** with more than two isocyanate groups per molecule are used, a branched polyurethane prepolymer **A1** is formed.

Most preferably the one or more polyisocyanates **I** is (are) selected from the group consisting of aliphatic isocyanates, and are even most preferably selected from the group consisting of hexamethylene diisocyanate (HDI), bis-(4-isocyanatocyclohexyl)methane (H12-MDI), 1-isocyanatomethyl-5-isocyanato-1,3,3-trimethylcyclohexane (isophorone diisocyanate, IPDI) and mixtures thereof.

The one or more polyisocyanate(s) **I** can be obtained from petrochemical feedstock.

Alternatively and preferred, where possible, the polyisocyanates **I** are obtained from renewable feedstock. Particularly preferred is isophorone diisocyanate (1-isocyanatomethyl-5-isocyanato-1,3,3-tri-methylcyclohexane (IPDI)) obtained from bio-based acetone. Other preferred polyisocyanates derived in part from renewable feedstocks are for example 1,5-pentamethylene diisocyanate, diisocyanates of the methyl or ethyl esters of L-lysine, isosorbide-based diisocyanates, furan based diisocyanate, bis(4-isocyanato-2-methoxyphenoxy) alkane, bis(4-isocyanato- 2,6-dimethoxyphenoxy)alkane, 2,4-diisocyanato-1-pentadecylbenzene, di- and polyisocyanates based on fatty acids, dimer fatty acids and vegetable oils, 1-isocyanato-10-[(isocyanatomethyl)thio]decane and a product known under the tradename TOLONATE^{™} X FLO 100.

In yet another alternative, the one or more polyisocyanate(s) **I** is (are) obtained from petrochemical feedstock and/or renewable feedstock.

In the context of the present description, "renewable feedstock" refers to natural resources which will replenish to replace the portion depleted by usage and consumption, either through natural reproduction or other recurring processes (in a finite amount of time in a human time scale). Substances or mixtures of substances obtained from such renewable feedstock should have in total a bio-based carbon content of more than 20% by weight of total carbon content of the substance or mixture, the bio-carbon content being determined using the ASTM D6866-20 standard.

The monomeric compounds **ICM** having at least two isocyanate reactive groups preferably are monomeric compounds having at least two hydroxyl groups, or having at least two primary amino groups, or having at least one hydroxyl group and at least one primary amino group.

The monomeric compounds **ICM** having at least two isocyanate reactive groups can be obtained from petrochemical feedstock.

Preferably the monomeric compounds **ICM** having at least two hydroxyl groups are selected from the group consisting of 1,2-ethanediol, 1,2- and 1,3-propanediol, 1,2- and 1,4-butanediol, 2,2'-oxydi(ethan-1-ol), 2,2-dimethyl-1,3-propanediol, 2-methyl-2,4-pentanediol, 1,4-bis-hydroxymethylcyclohexane, 1,6-hexanediol, 1,8-octanediol, 1,10-decanediol, 1,12-dodecanediol, 1,13-tridecanediol, 1,18-octadecanediol, 1,21-heneicosanediol, 1,25-pentacosanediol, isosorbide, isomannide, isoidide and mixture thereof.

Alternatively and preferred, where possible, said monomeric compounds **ICM** having at least two hydroxyl groups (e.g. 1,3-propanediol, isosorbide, isomannide, isoidide) are obtained from renewable feedstock.

In yet another alternative, said monomeric compounds **ICM** having at least two hydroxyl groups are obtained from petrochemical feedstock and/or renewable feedstock.

Preferably the monomeric compounds **ICM** having at least two primary amino groups are selected from the group consisting of 1,4-diaminobutane, 1,6-diaminohexane, 2-methyl-1,5-diaminopentane and mixtures thereof.

Preferably the monomeric compounds **ICM** having at least one hydroxyl group and at least one primary amino group are selected from the group consisting of ethanolamine, propanolamine, 2-(2-amino-ethylamino-)ethanol and mixtures thereof.

The monomeric compound **ICM** may comprise a mixture of
- one or more monomeric compounds having at least two hydroxyl groups and one or more monomeric compounds having at least two primary amino groups, or
- one or more monomeric compounds having at least two hydroxyl groups and one or more compounds having at least one hydroxyl group and at least one primary amino group, or
- one or more monomeric compounds having at least two primary amino groups and one or more compounds having at least one hydroxyl group and at least one primary amino group, or
- one or more monomeric compounds having at least two hydroxyl groups, one or more monomeric compounds having at least two primary amino groups and or more compounds having at least one hydroxyl group and at least one primary amino group.

In case monomeric compound **ICM** having more than two isocyanate reactive groups per molecule are used, a branched polyurethane prepolymer **A1** is formed.

Preferably the polymeric compounds **ICP** having at least two isocyanate reactive groups are polymeric compounds **ICP** having at least two hydroxyl groups.

Preferably the polymeric compounds **ICP** are characterized by an hydroxyl number comprised between 20 and 400 mg KOH/g, more preferably between 40 and 300 mg KOH/g, most preferably between 50 and 250 mg KOH/g.

The polymeric compounds **ICP** can be obtained from petrochemical feedstock.

Preferably the polymeric compounds **ICP** having at least two hydroxyl groups are selected from the group consisting of polyesters having at least two hydroxyl groups **ICP1,** polyethers having at least two hydroxyl groups **ICP2,** polycarbonates having at least two hydroxyl groups **ICP3** and mixtures thereof.

The polyesters **ICP1** having at least two hydroxyl groups preferably have two hydroxyl groups and are prepared from stoichiometric excess of one or more diols and one or more diacids,
- said diols being preferably selected from the group consisting of 1,2-ethanediol, 1,2- and 1,3-propanediol, 1,2- and 1,4-butanediol, 2,2'-oxydi(ethan-1-ol), 2,2-dimethyl-1,3-propanediol, 2-methyl-2,4-pentanediol, 1,4-bis-hydroxymethylcyclo- hexane, 1,6-hexanediol, 1,8-octanediol, 1,10-decanediol, 1,12-dodecanediol, 1,13-tridecanediol, 1,18-octadecanediol, 1,21-heneicosanediol, 1,25-pentacosane diol, isosorbide, isomannide, isoidide and mixture thereof;
- said diacids being preferably selected from the group consisting of malonic acid, succinic acid, glutaric acid, adipic acid, octanedioic acid, and also dimeric fatty acids having up to forty carbon atoms, isophthalic acid, terephthalic acid, naphthalene dicarboxylic acids and mixtures thereof.

Optionally one or more hydroxy-carboxylic acids, such as for example hydroxybenzoic acid, lactic acid, gamma-hydroxybutyric acid, delta-hydroxyvaleric acid, and epsilon-hydroxycaproic acid, in combination with one or more diols may be used for the preparation of the hydroxyl-functional polyesters **ICP1.**

Preferably the polyesters **ICP1** are the condensation product of diacids selected from the group consisting of adipic acid, isophthalic acid and mixtures thereof and a stoichiometric excess of diols selected from the group consisting of 1,4 butanediol, 1,6-hexanediol, 2,2'-oxydi(ethan-1-ol), 2,2-dimethyl-1,3-propanediol and mixtures thereof, said polyesters being characterized by a hydroxyl number comprised between 20 and 400 mg KOH/g, preferably between 30 and 250 mg KOH/g, more preferably between 40 and 150 mg KOH/g and an acid number of less than 3 mg KOH/g, preferably less than 2 mg KOH/g, more preferably less than 1 mg KOH/g said acid number being residual and generated by end-standing unreacted acid functionalities.

Alternatively and preferred, where possible, said diols (e.g. 1,3-propanediol), diacids (e.g. succinic acid) or hydroxy-carboxylic acid(s) (e.g. lactic acid) used for the preparation of the polyesters **ICP1,** are obtained from renewable feedstock.

In yet another alternative, the polyesters **ICP1** are obtained from petrochemical feedstock and/or renewable feedstock.

By hydroxyl-functional polyester **ICP1** having two hydroxyl groups the present invention should be understood as a polyester having almost two hydroxyl groups and a negligible amount of carboxylic acid groups, since a 100% conversion is hardly to achieve.

The polyether **ICP2** preferably are poly(oxyalkylene) glycols comprising between 2 and 6 alkylradicals, more preferably the polyethers are selected from the group consisting of poly(oxyethylene)glycol, poly(oxypropylene)glycol, poly (oxytetramethylene)glycol and mixtures thereof.

The polyether **ICP2** having at least two hydroxyl groups include products obtained by the polymerisation of a cyclic oxide, for example ethylene oxide, propylene oxide or tetrahydrofuran or by the addition of one or more such oxides to polyfunctional initiators, for example water, ethylene glycol, propylene glycol, diethylene glycol, cyclohexane dimethanol, glycerol, trimethylolpropane, pentaerythritol or Bisphenol A. Especially useful polyethers include polyoxypropylene diols and triols, poly (oxyethylene-oxypropylene) diols and triols obtained by the simultaneous or sequential addition of ethylene and propylene oxides to appropriate initiators and polytetramethylene ether glycols obtained by the polymerisation of tetrahydrofuran. Amine-terminated polyetherpolyols may also be used.

Preferably the polyethers **ICP2** are poly(oxyalkylene) glycols comprising between 2 and 4 alkylradicals, more preferably the polyethers are selected from the group consisting of poly(oxyethylene)glycol, poly(oxypropylene)glycol, poly (oxytetramethylene)glycol and mixtures thereof.

Alternatively and preferred, where possible, polyethers **ICP2** are poly(oxyalkylene) glycols obtained from renewable feedstock, more preferably poly(oxyalkylene) glycols obtained from bio-based 1,3-propandiol.

In yet another alternative, the polyethers **ICP2** are obtained from petrochemical feedstock and/or renewable feedstock.

The polycarbonate **ICP3** compounds having at least two hydroxyl groups preferably are prepared by reaction of polyols, such as 1,3-propanediol, 1,4-butanediol, 1,6-hexanediol, diethylene glycol, triethylene glycol, 1,4-bishydroxymethylcyclohexane, 2,2-bis(4-hydroxycyclohexyl) propane, neopentylglycol, trimethylolpropane or pentaerythritol, with di-carbonates, such as dimethyl, diethyl or diphenyl carbonate, or phosgene.

Alternatively and preferred, where possible, the polycarbonate **ICP3** compounds are obtained from renewable feedstock, more preferably polycarbonate compounds obtained from bio-based polyols (e.g. bio-based 1,3-propanediol or 1,5-pentanediol).

In yet another alternative, the polycarbonate **ICP3** compounds are obtained from petrochemical feedstock and/or renewable feedstock.

Other polymeric compounds **ICP,** useful for the preparation of the isocyanate functional polyurethane prepolymer **A1** of the present invention, include polyesteramides, polythioethers, polyacetals, polyolefins or polysiloxanes, said other compounds **ICP** having at least two hydroxyl groups.

In a preferred embodiment, at least one of the monomeric compounds **ICM** is an isocyanate-reactive monomer, **MUoh,** having at least two isocyanate reactive groups and an ethylenically unsaturated group.

Preferably the one or more isocyanate-reactive monomer(s) **MUoh** having at least two isocyanate-reactive groups and an ethylenically unsaturated group are compounds having at least two hydroxyl groups and at least one ethylenically unsaturated group. More preferably the one or more isocyanate-reactive monomer(s) **MUoh** are esters of (meth)acrylic acid with polyols, said polyols being preferably selected from the group consisting of glycerol, trimethylolpropane, ditrimethylolpropane, pentaerythritol, dipentaerythritol and mixtures thereof.

The one or more isocyanate-reactive monomer(s) **MUoh** having at least two isocyanate-reactive groups and an ethylenically unsaturated group more preferably are compounds having at least two hydroxyl groups and one ethylenically unsaturated group. Even more preferably the one or more isocyanate-reactive monomer(s) **MUoh** are selected from the group consisting of glycerol mono(meth)acrylate (also referred to as glycerine mono(meth)acrylate), trimethylolpropane mono(meth)acrylate and mixtures thereof. Most preferably the one or more isocyanate-reactive monomer(s) **MUoh** is (are) glycerol mono(meth)acrylate.

Preferably the one or more isocyanate-reactive monomer(s) **MUoh** having at least two isocyanate-reactive groups and an ethylenically unsaturated group are provided in such an amount that the isocyanate functional polyurethane prepolymer **A1** is characterized by an unsaturated equivalent weight (UEW) comprised between 3,500 and 35,000 g/equiv., preferably between 4,500 and 20,000 g/equiv., more preferably between 6,000 and 15,000 g/equiv.; said unsaturation being provided by the ethylenically unsaturated groups being pending groups (or the ethylenically unsaturated groups being pending groups).

The isocyanate reactive monomer(s) **ICMA** having at least two isocyanate reactive groups and at least one acid group or group being able to form an acid when contacted with water, such as an anhydride, preferably are monomers having at least two hydroxyl groups and at least one acid group or group being able to form an acid when contacted with water. More preferably the one or more **ICMA** monomers are selected from the group consisting of 2,2-(bis-hydroxymethyl)acetic acid, 2,2-(bishydroxymethyl)-propionic acid, 2,2-(bishydroxymethyl)butyric acid and mixtures thereof.

The isocyanate reactive monomer(s) **ICMA** having at least two isocyanate reactive groups and at least one acid group or group being able to form an acid when contacted with water, are, at a later stage of the polyurethane-vinyl polymer hybrid **A** preparation, converted into anionic dispersant groups, by converting the acid group into an acid salt group through the addition of one or more acid neutralizing compound(s) **N.** Preferably the amount of acid neutralizing compound(s) **N** is between 10 and 100 moles, more preferably between 30 and 100 moles, and most preferably between 50 and 100 moles, for 100 moles of acid groups (or groups being able to form an acid when contacted with water) originating from isocyanate reactive monomer(s) **ICMA.**

The one or more acid neutralizing compound(s) **N** preferably are selected from the group consisting of primary, secondary and tertiary amines, and strong Arrhenius bases (such as the hydroxides of alkali metals and alkaline earth alkali metals), and mixtures thereof.

More preferably the acid neutralizing compound(s) **N** are selected from the group consisting of ammonia, 2-amino-2-methylpropanol, sodium hydroxide, potassium hydroxide, lithium hydroxide, compounds having not more than one hydroxyl group and at least one tertiary amino group per molecule, and mixtures thereof.

Even more preferably the acid neutralizing compound(s) **N** are selected from the group consisting of ammonia, trimethylamine, triethylamine, tributylamine, benzyldimethylamine, dimethyllaurylamine, N,N-dimethylcyclohexylamine, ethyldiisopropylamine, N,N-dimethylaminoethanol, N,N-diethylaminoethanol, N,N-diethylhydroxylamine, 1-dimethylamino-2-propanol, 1-dimethylamino-3-propanol, 1-deoxy-1-(dimethylamino)-D-glucitol, N-(2-hydroxy ethyl)piperazine and mixtures thereof. Yet even more preferably, the acid neutralizing compound(s) **N** are selected from the group consisting of ammonia, N,N-dimethylaminoethanol, and mixtures thereof. Most preferably the acid neutralizing compound(s) **N** is ammonia.

The aqueous polyurethane-vinyl polymer hybrid dispersion **D** of the present invention may further comprise a vinyl polymer **VP**, said vinyl polymer **VP** being the reaction product of one or more ethylenically unsaturated monomer(s) **MU2** having at least one polymerisable ethylenic unsaturation, the **MU2** being polymerized in the presence of the polyurethane-vinyl polymer hybrid **A.**

Vinyl polymer **VP** preferably is a blend of vinyl polymer **VP1** and vinyl polymer **VP2,** both vinyl polymers **VP1** and **VP2** being the reaction product of one or more ethylenically unsaturated monomer(s) **MU2** having at least one polymerisable ethylenic unsaturation, and **VP2** being made by polymerization in the presence of **VP1 (VP1** already being formed in a previous polymerization step). It is well known by the skilled person in the art that in such multiple step polymerization, the subsequent step will only be initiated when the conversion from monomers to polymer in the previous step is sufficiently high. It will be apparent for those skilled in the art when the conversion in the previous step is sufficiently high. For example, a subsequent (or second step) of polymerizing will only be initiated when less than about 500 ppm monomers are still present in the reaction mixture that was used for performing the previous (or first step) of polymerizing. The % by weight of each monomer being polymerized to form vinyl polymer **VP1** can be the same as, or preferably different from, the % by weight of the corresponding monomer being polymerized to form vinyl polymer **VP2,** the sum of % by weight of all monomers forming vinyl polymer **VP1,** as well as the sum of % by weight of all monomers forming vinyl polymer **VP2,** each being 100%. Each of the one or more ethylenically unsaturated monomer(s) **MU2** for forming vinyl polymer **VP1** can be the same as, or different from, each of the one or more ethylenically unsaturated monomer(s) **MU2** for forming vinyl polymer **VP2.**

The ratio of the weight (or wt%) of vinyl polymer **VP1** to the weight (or wt%) of vinyl polymer **VP2** preferably is between 0.10 and 0.90, more preferably between 0.20 and 0.80, even more preferably between 0.30 and 0.70 and most preferably between 0.40 and 0.60.

Preferably, the % by weight of vinyl polymer **VP,** based on the sum of the weights of polyurethane-vinyl polymer hybrid **A,** in its solid unneutralized form, and vinyl polymer **VP,** is comprised between 20 and 80 wt%, more preferably between 30 and 70 wt% and most preferably between 40 and 60 wt% (the weight of vinyl polymer **VP** being calculated as the sum of the weights of vinyl polymer **VP1** and vinyl polymer **VP2**).

Preferably the one or more ethylenically unsaturated monomers **MU1** and/or **MU2** is (are) selected from the group consisting of mono-ethylenically unsaturated monomers, poly-ethylenically unsaturated monomers and mixtures thereof.

More preferably the one or more ethylenically unsaturated monomer(s) **MU1** and/or **MU2** is (are) selected from the group consisting of alkyl (meth)acrylates, hydroxy-functional (meth)acrylates, epoxy-functional (meth)acrylates, keto-functional ethylenically unsaturated monomers, (meth)acrylamides, vinyl monomers and mixtures thereof.

In case the one or more ethylenically unsaturated monomer(s) **MU1** and/or **MU2** is (are) an alkyl (meth)acrylate, it is preferably selected from the group consisting of esters of (meth)acrylic acid with aliphatic linear, branched or cyclic monoalcohols having from one to twelve carbon atoms in the alkyl group, more preferably being selected from the group consisting of methyl (meth)acrylate, ethyl (meth)acrylate, butyl (meth)acrylate, hexyl (meth)acrylate, 2-ethylhexyl (meth)acrylate, isobornyl (meth)acrylate and mixtures thereof.

In case the one or more ethylenically unsaturated monomer(s) **MU1** and/or **MU2** is (are) a hydroxy-functional (meth)acrylate, it is preferably selected from the group consisting of esters of (meth)acrylic acid with aliphatic linear, branched or cyclic diols having from one to twelve carbon atoms in the alkyl group, more preferably being selected from the group consisting of hydroxyethyl (meth)acrylate, hydroxypropyl (meth)acrylate and hydroxybutyl (meth)acrylate, and mixtures thereof.

In case the one or more ethylenically unsaturated monomer(s) **MU1** and/or **MU2** is (are) an epoxy-functional (meth)acrylate, it is preferably glycidyl methacrylate.

In case the one or more ethylenically unsaturated monomer(s) **MU1** and/or **MU2** is (are) a keto-functional ethylenically unsaturated monomer, it is preferably selected from the group consisting of keto-functional (meth)acrylates and keto-functional (meth)acryl amides and mixtures thereof, more preferably being selected from the group consisting of diacetone-acrylamide, 2-acetoacetoxyethyl (meth)acrylate and mixtures thereof.

In case the one or more ethylenically unsaturated monomer(s) **MU1** and/or **MU2** is (are) a vinyl monomer, it is preferably selected from the group consisting of styrene, vinyltoluene, acrylonitrile, methacrylonitrile and mixtures thereof.

The one or more ethylenically unsaturated monomers **MU1** and/or **MU2** may comprise up to 30% by weight, more preferably up to 20% by weight, and most preferably up to 15% by weight of the total amount of ethylenically unsaturated monomers, of keto-functional ethylenically unsaturated monomers, thereby forming carbonyl groups pending from the vinyl part of the polyurethane-vinyl polymer hybrid **A** and/or pending from the vinyl polymer **VP.** More preferably said keto-functional ethylenically unsaturated monomers are selected from the group consisting of keto-functional (meth)acrylates and keto-functional (meth)acryl amides and mixtures thereof. Most preferably said keto-functional ethylenically unsaturated monomers are diacetone-acrylamide or 2-acetoacetoxyethyl (meth)acrylate or mixtures thereof.

The one or more ethylenically unsaturated monomers **MU1** and/or **MU2** may comprise up to 10% by weight, of the total amount of ethylenically unsaturated monomers, of poly-ethylenically unsaturated monomers. More particularly, the one or more ethylenically unsaturated monomers **MU1** and/or **MU2** optionally comprise up to 10% by weight, of the total amount of ethylenically unsaturated monomers, of poly-ethylenically unsaturated monomers selected from the group consisting of ethylene glycol di(meth)acrylate, 1,2-propylene glycol di(meth)acrylate, 1,3-propylene glycol di(meth)acrylate, butane-1,4-diol di(meth)acrylate, neopentyl glycol di(meth)acrylate, 3-methylpentanediol di(meth)acrylate, diethylene glycol di(meth)acrylate, triethylene glycol di(meth)acrylate, tetraethylene glycol di(meth)acrylate, dipropylene glycol di(meth)acrylate, tripropylene glycol di(meth)acrylate, hexanediol di(meth)acrylate, allyl(meth)acrylate, trimethylolpropane tri(meth)acrylate, glyceryl tri(meth)acrylate, trimethylolpropane di(meth)acrylate monoallyl ether, trimethylolpropane(meth)acrylate diallyl ether, pentaerythritol tri(meth)acrylate monoallyl ether, pentaerythritol di(meth)acrylate diallyl ether, pentaerythritol(meth)acrylate triallyl ether, triallylsucrose and pentaallylsucrose, and mixtures thereof.

More preferably the one or more ethylenically unsaturated monomers **MU1** and/or **MU2** are selected from the group consisting of alkylacrylates, alkyl(meth)acrylates and mixtures thereof.

Alternatively and preferred, where possible, the one or more ethylenically unsaturated monomers **MU1** and/or **MU2** are obtained from renewable feedstock (i.e. the monomers, such as for example n-heptyl acrylate, isobornyl methacrylate, and/or isobutyl acrylate, are obtained in part or fully from (bio-)renewable sources). The exact amounts of bio-based carbon in these monomers can be determined by the method described in ASTM D6866-20, wherein carbons resulting from contemporary biomass-based inputs are distinguished from those derived from fossil-based inputs, the bio-based carbon content being reported as the fraction of total organic carbon content (TOC). Other standardized methods to determine the fraction of renewable carbon are ISO 16620-2 and CEN 16640.

Another alternative method for reducing the carbon footprint of the present polymer hybrid dispersions is to use recycled monomers for the preparation thereof. Polymers, such as poly(methyl methacrylate) or poly(styrene), can be pyrolyzed at temperatures above their ceiling temperature. By distillation of the pyrolysis products, recycled monomers, such as methyl methacrylate or styrene, can be obtained which can then be further used in the emulsion polymerization for preparing the present polymer dispersions.

In yet another alternative, the one or more ethylenically unsaturated monomers **MU1** and/or **MU2** are obtained from petrochemical feedstock and/or renewable feedstock, and/or are recycled monomers.

In the context of the present description, "bio-based carbon content" refers to bio-carbon content.

The aqueous polyurethane-vinyl polymer hybrid dispersion **D** of the present invention can optionally further comprise a multifunctional compound **B,** said compound **B** having functional groups reactable with the carbonyl groups of the polyurethane-vinyl polymer hybrid **A** (having pendant acid salt groups and end-standing carbonyl groups) being present in said dispersion **D.**

The multifunctional compound **B** having functional groups reactable with the carbonyl groups of polyurethane-vinyl polymer hybrid **A** is preferably selected from the group consisting of polyhydrazides, polyhydrazones and mixtures thereof. Examples of such polyhydrazides and polyhydrazones include:
- dicarboxylic acid bishydrazides of formula:

   H₂N-NH-C(O)-R⁸-C(O)-NH-NH₂

   and
- dicarboxylic acid bis-hydrazones of formula:

   R⁹R¹⁰C=N-NH-C(O)-R⁸-C(O)-NH-N=CR⁹R¹⁰
wherein R⁸ is a covalent bond or a polyalkylene (preferably polymethylene) or alicyclic group having from 1 to 34 carbon atoms or a divalent aromatic ring, and R⁹ and R¹⁰ are selected from the group consisting of H and (C₁ to C₆) alkyl and alicyclic groups.

Examples of suitable dihydrazides include oxalic acid dihydrazide, malonic acid dihydrazide, succinic acid dihydrazide, glutaric acid dihydrazide, adipic acid dihydrazide, cyclohexane dicarboxylic acid dihydrazide, azelaic acid dihydrazide, and sebacic acid dihydrazide.

More preferably the multifunctional compound **B** is a reaction product of hydrazine and a polycarboxylic acid, even more preferably a reaction product of hydrazine and a dicarboxylic acid, most preferably compound **B** is selected from the group consisting of oxalic acid dihydrazide, malonic acid dihydrazide, succinic acid dihydrazide, glutaric acid dihydrazide, adipic acid dihydrazide, cyclohexane dicarboxylic acid dihydrazide, azelaic acid dihydrazide, sebacic acid dihydrazide and mixtures thereof.

Other suitable compounds **B** are polyhydrazides of carbonic acid, e.g. carbonic acid dihydrazide and compounds of the general formula:

H₂N-NH-CO-(NH-NH-CO-)ₓ-NH-NH₂

where x is an integer from 1 to 5, preferably from 1 to 3, and
bis-semicarbazides, especially aliphatic and cycloaliphatic bis-semicarbazides of the general formula:

H₂N-NH-CO-NH-R¹¹-HN-CO-NH-NH₂

where -R¹¹- is a straight or branched aliphatic radical of 2 to 7 carbon atoms or a carbocyclic radical of 6 to 8 carbon atoms, e.g. o-, m- or p-phenylene or toluene or cyclohexylidene or methylcyclohexylidene.

Other suitable compounds **B are** polyhydrazides of aromatic polycarboxylic acids, e.g. the dihydrazides of phthalic acid, terephthalic acid and isophthalic acid, and the dihydrazides, the trihydrazide and the tetrahydrazide of pyromellitic acid.

Other suitable compounds **B** are trihydrazides, e.g. nitrilotriacetic acid trihydrazide, and tetrahydrazides, e.g. ethylenediaminetetraacetic acid tetrahydrazide.

Other suitable compounds **B** are dihydrazino- and trihydrazino-triazine, thiocarbohydrazide and N,N'-diaminoguanidine, as well as hydrazinopyridine derivatives of the type of 2-hydrazino-pyridine-5-carboxylic acid hydrazide, 3-chloro-2-hydrazinopyridine-5-carboxylic acid hydrazide, 6-chloro-2-hydrazinopyridine-4-carboxylic acid hydrazide and 2,5-dihydrazinopyridine-4-carboxylic acid, and bis-thiosemicarbazides as well as bis-hydrazines of alkylene-bis-acrylamides, dihydrazinoalkanes and dihydrazines of aromatic hydrocarbons, e.g. 1,4-dihydrazinobenzene, 1,3-dihydrazinobenzene and 2,3-dihydrazinonaphthalene.

Even most preferably the multifunctional compound **B** is adipic acid dihydrazide.

Preferably the aqueous polyurethane-vinyl polymer hybrid dispersion **D** of the present invention comprises polyurethane-vinyl polymer hybrid **A** having pendant acid salt groups and end-standing carbonyl functional groups, and multifunctional compound **B,** wherein the mole ratio of the sum of the carbonyl functional groups of polyurethane-vinyl polymer hybrid **A** and, if present, the carbonyl functional groups of vinyl polymer **VP,** to the (hydrazide) functional groups of multifunctional compound **B** is from 0.7 to 1.3, preferably from 0.8 to 1.2, more preferably from 0.9 to 1.1.

The aqueous polyurethane-vinyl polymer hybrid dispersion **D** is preferably characterized by:
- a solid content, determined according to DIN 55671 (foil method), comprised between 30 and 60% by weight, preferably between 40 and 50% by weight;
- a dynamic viscosity, determined according to DIN EN ISO 3219 at a temperature of 23°C and a shear rate of 100 s⁻¹,comprised between 50 and 5,000 mPa.s;
- a pH value, determined as a 10% aqueous solution according to DIN ISO 976, comprised between 7 and 8.5;
- a Z-average particle size, determined according to DIN ISO 22412 (Dynamic Light Scattering), comprised between 20 and 150 nm.

The aqueous polyurethane-vinyl polymer hybrid dispersions **D** of the present invention are prepared in a multi-step process comprising the following (sequential) steps:
a) mixing one or more isocyanate reactive compound(s) **IC** having at least two isocyanate reactive groups with one or more isocyanate reactive monomers **ICMA** having at least two isocyanate reactive groups and at least one acid group or group being able to form an acid when contacted with water, and heating the mixture to a temperature of at least 60°C, preferably at least 90°C, more preferably at least 120°C, for at least 10 minutes under stirring;
b) continuously adding a sub-stoichiometric quantity of one or more polyisocyanate(s) **I** to the mixture of step a), over a time period of from ten minutes to eighty minutes while keeping the temperature in a range of from 60°C to 150°C, preferably between 80°C and 140°C, to form a hydroxyl-functional polyurethane prepolymer, preferably a hydroxyl-functional polyurethane prepolymer characterized by a hydroxyl number comprised between 30 and 140 mg KOH/g, preferably comprised between 40 and 130 mg KOH/g;
c) adding one or more monomeric compound(s) **ICM** having at least two isocyanate reactive groups, and optionally one or more isocyanate reactive monomer(s) **MUoh** having at least two isocyanate reactive groups and an ethylenically unsaturated group, and preferably one or more ethylenically unsaturated monomer(s) **MU1,** to the hydroxyl-functional polyurethane prepolymer, preferably the hydroxyl-functional polyurethane prepolymer of step b), and homogenizing the mixture, optionally in the presence of an antioxidant or radical scavenger;
d) adding a further amount of polyisocyanate **I,** while stirring at a temperature in the range of from 60°C to 100°C, preferably between 70°C and 90°C, to the homogenized mixture of step c) in stoichiometric excess, thereby forming an isocyanate functional polyurethane prepolymer **A1,** preferably said isocyanate functional polyurethane prepolymer **A1** is characterized by an isocyanate equivalent weight comprised between 600 and 2,200 g/equiv., more preferably between 800 and 2,000 g/equiv., most preferably between 1,000 and 1,800 g/equiv. (the amount of ethylenically unsaturated monomer(s) **MU1** optionally added in step c) not taken into account for the determination of the equivalent weight of said isocyanate-functional polyurethane prepolymer);
e) adding, in one shot, a mixture of compound **A2,** preferably one or more ethylenically unsaturated monomer(s) **MU1,** and optionally one or more primary amine(s) **A22** and optionally water, to the isocyanate-functional polyurethane prepolymer **A1** of step d) standing at a temperature comprised between 70°C and 95°C, preferably between 75°C and 90°C, and homogenizing for at least 10 minutes at the resulting temperature, to convert the isocyanate-functional polyurethane prepolymer **A1** into a polyurethane comprising end-standing carbonyl groups (and wherein said carbonyl functional building block **A2** is bound at the extremity of the isocyanate functional polyurethane prepolymer **A1**);
f) adding, in one shot, one or more acid neutralizing compound(s) **N** to the polyurethane of step e) comprising acid groups and carbonyl groups, and homogenizing for at least 5 minutes, to convert the acid groups into the corresponding salt, resulting in a polyurethane comprising pendant acid salt groups and end-standing carbonyl groups;
g) adding water to the homogenized mixture of step f), thereby forming an emulsion;
h) homogenizing the emulsion of step g) at a temperature in the range of from 40°C to 80°C, preferably between 50°C and 70°C, for at least 10 minutes;
i) redox-polymerizing the homogenized emulsion of step h) by gradually adding at least one of the redox system components over at least 10 minutes, preferably over a time period of from 10 to 40 minutes, while maintaining the temperature in the range of from 60°C to 80°C, thereby forming the polymerization mixture;
j) maintaining the temperature of the polymerization mixture at a temperature comprised between 65°C and 85°C for at least 15 minutes, preferably over a time period of from 20 to 30 minutes, for further polymerizing, thereby forming the aqueous dispersion **D** of polyurethane-vinyl polymer hybrids **A** having pendant acid salt groups and end-standing carbonyl groups; and
k) cooling down the aqueous dispersion **D** of polyurethane-vinyl polymer hybrids **A** of step j) to a temperature below 40°C and optionally adding multifunctional compound **B** thereto.

Preferably, in step c) one or more isocyanate-reactive monomer(s) **MUoh** having at least two isocyanate-reactive groups, preferably at least two hydroxyl groups, and an ethylenically unsaturated group, and one or more monomeric compound(s) **ICM** having at least two isocyanate reactive groups, preferably at least two hydroxyl groups or at least two primary amino groups or at least an hydroxyl group and a primary amino group, and more preferably one or more ethylenically unsaturated monomer(s) **MU1,** are added to the hydroxyl-functional polyurethane prepolymer of step b), and the mixture is homogenized, optionally in the presence of an antioxidant or radical scavenger.

In the context of the present description, "an aqueous polyurethane-vinyl polymer hybrid dispersion" refers to a dispersion of polymer particles (droplets) in a continuous aqueous phase, where said polymer particles (droplets) comprise a polyurethane polymer and one or more vinyl polymer(s). The one or more vinyl polymer(s) are thereby formed in the same droplet and in the presence of the said polyurethane polymer. Said polyurethane polymer and said one or more vinyl polymer(s) can be (chemically) covalently bond to each other, or can be present as a pure physical blend of polymers, or both. Without being bound by theory it is believed that, in case one or more isocyanate-reactive monomer(s) **MUoh** is (are) used as ingredient for obtaining isocyanate functional polyurethane prepolymer **A1,** and ethylenically unsaturated monomer(s) **MU1** are reacted by (free) radically initiated copolymerisation in the presence of said isocyanate functional polyurethane prepolymer **A1,** a polyurethane-vinyl polymer hybrid **A** is obtained where at least parts of the vinyl polymer is covalently bond to the polyurethane polymer.

In the process for the preparation of the aqueous polyurethane-vinyl polymer hybrid dispersions **D** of the present invention, ethylenically unsaturated monomers **MU1** may be added at any of the steps a) to f).

Preferably, ethylenically unsaturated monomers **MU1** are added in at least one of the steps a) to e).

More preferably, ethylenically unsaturated monomers **MU1** are (only) added in step c) and/or step e).

By adding the one or more acid neutralizing compound(s) **N** in step f), the acid groups (or groups being able to form an acid when contacted with water) originating from isocyanate reactive monomer(s) **ICMA** are converted into acid salt groups. To avoid an excess of neutralizing compound, the one or more acid neutralizing compound(s) **N** is (are) preferably added in a total molar amount at most equal to the total molar amount of acid groups originating from isocyanate reactive monomer(s) **ICMA.**

The addition in one shot, in step e) and f), should be understood as an addition over a time period which is at least 50% less, preferably at least 60% less, more preferably at least 70% less, most preferably at least 80% less or even at least 90% less than the homogenization period of the final mixture.

Carbonyl functional building block **A2,** added in step e) is preferably prepared in a separate reaction by
- heating **A21,** preferably in the presence of deionized water as solvent, under nitrogen, at a temperature comprised between 50°C and 80°C, preferably between 60°C and 80°C, until entirely molten (dissolved);
- adding a 0 to 45 percentage, preferably a 0 to 35 percentage molar excess of **A22,** in one shot; and
- heating the mixture of **A21** and **A22** to a temperature comprised between 60°C and 85°C, preferably between 65°C and 80°C, for a period comprised between 1 and 24 hours, preferably between 1 and 15 hours until full conversion of **A21,** as confirmed by *gas chromatography coupled with* mass *spectrometry* (GC-MS).

Confirming conversion of **A21** by GC-MS is well known to the skilled person in the art and is of general practice. Full conversion of **A21** should be understood as less than 500 ppm, more preferably less than 300 ppm, and most preferably less than 200 ppm of **A21** being present in the reaction mixture.

The addition in one shot of **A22** to **A21** should be understood as an addition over a time period which is at least 50% less, preferably at least 60% less, more preferably at least 70% less, most preferably at least 80% less or even at least 90% less than the homogenization period of the mixture of **A22** and **A21.**

To the aqueous polyurethane-vinyl polymer hybrid dispersions **D** thus formed, the following additional sequential steps may still be performed (above mentioned (step k) is skipped in such case):
I) fast adding (in one shot) a mixture of ethylenically unsaturated monomers **MU2** to the aqueous dispersion **D** of polyurethane-vinyl polymer hybrids **A** having pendant acid salt groups and end-standing carbonyl groups of step j) and homogenizing the mixture at a temperature in the range of from 40°C to 80°C, preferably in the range of from 50°C to 70°C, during at least 10 minutes;
m) redox-polymerizing the homogenized emulsion of step l) by gradually adding at least one of the redox system components over at least 10 minutes while maintaining the temperature in the range of from 50°C to 90°C, preferably in the range of from 60°C to 80°C, thereby forming the polymerization mixture;
n) maintaining the temperature in the range of from 50°C to 90°C, preferably in the range of from 60°C to 80°C for at least 15 minutes to finalize the polymerization, thereby forming the aqueous polyurethane-vinyl polymer hybrid dispersion **D,** further comprising a first vinyl polymer **VP1;** and
o) cooling down the aqueous polyurethane-vinyl polymer hybrid dispersion **D,** further comprising a first vinyl polymer **VP1** of step n) to a temperature below 40°C and optionally adding multifunctional compound **B** thereto.

To the aqueous polyurethane-vinyl polymer hybrid dispersions **D** thus formed, the following further additional sequential steps may still be performed (above mentioned (step o) is skipped in such case):
p) fast adding (in one shot) a mixture of ethylenically unsaturated monomers **MU2** to the aqueous polyurethane-vinyl polymer hybrid dispersion **D,** further comprising a first vinyl polymer **VP1** of step n) and homogenizing the mixture at a temperature in the range of from 40°C to 80°C, preferably in the range of from 50°C to 70°C, during at least 10 minutes;
q) redox-polymerizing the homogenized emulsion of step p) by gradually adding at least one of the redox system components over at least 10 minutes while maintaining the temperature in the range of from 50°C to 90°C, preferably in the range of from 60°C to 80°C, thereby forming the polymerization mixture;
r) maintaining the temperature in the range of from 50°C to 90°C, preferably in the range of from 60°C to 80°C for at least 15 minutes to finalize the polymerization, thereby forming the aqueous polyurethane-vinyl polymer hybrid dispersion **D,** further comprising first vinyl polymer **VP1** and second vinyl polymer **VP2;** and
s) cooling down the aqueous polyurethane-vinyl polymer hybrid dispersion **D,** further comprising first vinyl polymer **VP1** and second vinyl polymer **VP2** of step r) to a temperature below 40°C and optionally adding multifunctional compound **B** thereto.

Fast adding (or fast addition) of one or more compound(s) should be understood as an addition of the one or more compound(s) over a time period which is at least 50% less, preferably at least 60% less, more preferably at least 70% less, even more preferably at least 80% less, most preferably at least 90% less, or even at least 95% less than the homogenization period of the final mixture obtained.

More particularly, fast adding of the ethylenically unsaturated monomers in step l) and p) should be understood as an addition over a time period which is at least 50% less, preferably at least 60% less, more preferably at least 70% less, even more preferably at least 80% less, most preferably at least 90% less, or even at least 95% less than the homogenization period of the final obtained mixture comprising said ethylenically unsaturated monomers. Preferably the ethylenically unsaturated monomers **MU2** in step l) and p) are added in a one shot addition.

In the present description, "a one shot addition of one or more compound(s)" is referred to as an addition of the one or more compound(s) over a time period which is substantially 100% less than the homogenization period of the final obtained mixture.

Redox-polymerizations mentioned through the present description are polymerization methods which are well known to the skilled person in the art.

The redox-poymerization of steps i), m) and q) in practice comprises:
- first adding the redox solution followed by the gradual addition of the peroxide; or
- first adding the peroxide followed by the gradual addition of the redox solution; or
- gradually feeding the redox solution and the peroxide.

The antioxidant or radical scavenger optionally added in step c) preferably is a sterically hindered phenol, such as a phenol having bulky substituents, preferably tert-butyl groups in the 2- and 6-positions and an alkyl substituent in the 4-position.

The aqueous polyurethane-vinyl polymer hybrid dispersions **D** of the invention are suitable for diverse uses, for example for the preparation of coating compositions or as binders for water-dilutable adhesive compositions.

The aqueous polyurethane-vinyl polymer hybrid dispersions **D** of the invention can be combined with, and are in general compatible with, other aqueous dispersions and solutions of plastics, for example acrylic and/or methacrylic polymers, polyurethane, polyurea resins, polyester resins and epoxy resins, thermoplastics based on polyvinyl acetate, polyvinyl chloride, polyvinyl ether, polychloroprene, polyacrylonitrile, and ethylene/butadiene/styrene copolymers.

A coating composition, or a water-dilutable adhesive composition, comprising the aqueous polyurethane-vinyl polymer hybrid dispersion **D** may further comprise one or more additive(s) selected from the group consisting of defoamers, levelling agents, UV-absorbers, coalescing agents, flow modifiers, rheology additives, crosslinkers, fillers, pigments, active pigments and wetting agents.

The coating composition comprising the aqueous polyurethane-vinyl polymer hybrid dispersion **D** further may comprise organic co-solvents selected from the group consisting of alcohols, ketones, esters, glycols, glycol ethers, and glycol esters, and mixtures thereof. Particularly preferred organic co-solvents are water-miscible solvents, like methoxypropanol, methoxypropoxypropanol, or butylglycol. The amount of co-solvent comprised in the coating composition comprising the aqueous polyurethane-vinyl polymer hybrid dispersion **D** is preferably less than 10% by weight, more preferably less than 5% by weight and even more preferably less than 2% by weight, based on the total weight of the coating composition. Most preferably the coating composition comprising the aqueous polyurethane-vinyl polymer hybrid dispersion **D** comprises no, i.e. 0% by weight, organic co-solvent.

A coating composition comprising the aqueous polyurethane-vinyl polymer hybrid dispersion **D** may be used for coating a substrate selected from the group consisting of (solid) wood, engineered wood (such as medium density fibre board or high density fibre board, particle board or oriented strand board), metal, glass, cloth, composites, concrete, ceramics, leather, paper, cardboard, plastics and foam; more preferably selected from the group consisting of wood, engineered wood and metal; most preferably wood.

The coating compositions comprising the aqueous polyurethane-vinyl polymer hybrid dispersion **D** may be applied to the substrate by any conventional method including brushing, flow coating, roll coating, draw-down, coil coating, curtain coating, immersion coating, dip coating, spray coating, vacuum coating and the like.

The present invention further provides a substrate selected from the group consisting of wood, engineered wood, metal, glass, cloth, composites, concrete, ceramics, leather, paper, cardboard, plastics and foam; preferably wood, engineered wood and metal; most preferably wood; coated with the coating composition of the invention.

### EXAMPLES

The following illustrative examples are merely meant to exemplify the present invention but are not intended to limit or otherwise define its scope.

The following test methods have been used during synthesis and/or for characterization of the end-products:
- solid content was determined according to DIN 55671 (foil method) at 125°C for 10 min,
- pH value was determined as a 10% aqueous solution according to DIN ISO 976,
- dynamic viscosity was determined according to DIN EN ISO 3219 at a temperature of 23°C and a shear rate of 100 s⁻¹,
- Z-average particle size was determined according to DIN ISO 22412 (Dynamic Light Scattering),
- weight average molecular weight (Mw) was determined by Gel Permeation Chromatography (GPC), in tetrahydrofuran,
- full conversion of glycidyl groups was determined by potentiometric titration with tetrabutyl ammonium iodide as reaction solution and perchloric acid (0.1 mol/L) as titration reagent,
- carbonyl content, amino content, acid content and hydroxyl content of carbonyl functional building block **A2** and polyurethane-vinyl polymer hybrid **A,** respectively, were calculated by dividing the total number of carbonyl-groups, amino-groups, acid-groups and hydroxy groups, respectively, by the total weight of the sum of respective compounds **A22, MU1, A21, I, ICM, ICP, ICMA** and **MUoh.**

### Example 1: Synthesis of carbonyl functional building block A2 via Michael addition.

In a reactor purged with nitrogen 150.0 g (0.8864 mole) solid diacetone-acrylamide (**A21**) and 50.0 g deionized water were charged and heated to 75°C until the material was entirely dissolved. Then a slight molar excess of 72.19 g (1.1819 mole) of ethanolamine (**A22**) was added to the reactor in one shot and the resulting reaction mixture was stirred at 70°C to 75°C for 1 to 4 hours until full conversion of the diacetone acrylamide was confirmed by GC-MS measurement (residual diacetone-acrylamide less than 200 ppm). The reaction product was then cooled to ambient temperature and used as crude product without further purification in the synthesis of the carbonyl-terminated polyurethane-vinyl polymer hybrid. The carbonyl functional building block (**A2**) containing a slight molar excess of ethanolamine (**A22**) was characterized by a calculated carbonyl content of 3.2565 mmole/g, a calculated amino content of 4.3422 mmole/g and a calculated hydroxyl content of 4.3422 mmole/g.

### Example 2: Synthesis of aqueous dispersion comprising polyurethane-vinyl polymer hybrid A having pendant acid salt groups and end-standing carbonyl groups

In a reactor purged with nitrogen, 276.75 g of a polyadipate of 1,6-hexanediol with number average molecular weight (Mn) of 1,000 g/mole and a hydroxyl number of 112 mg KOH/g (**ICP**), 92.25 g polycarbonate diol of 1,6-hexandiol with number Average Molecular weight of 1,000 g/mole and a hydroxyl number of 112 mg KOH/g (**ICP**), and 79.00 g of dimethylolpropionic acid **(ICMA),** were heated to 130°C and the mixture was kept at this temperature until a homogeneous solution was formed. 117.9 g of isophorone diisocyanate **(I)** were then metered in over a period of 30 minutes, while stirring was continued at 130°C until no more free isocyanate groups could be detected. After cooling to 100°C, 1.05 g of 2,6-di-tert-butyl-4-methylphenol, 15.5 g of 1,4-butyleneglycol (**ICM**), 17.0 g of glycerol monomethacrylate **(MUoh),** 254.0 g of 2-ethylhexylacrylate **(MU1)** and 237.7 g of isophorone diisocyanate **(I),** were sequentially added. The components were reacted at 75 - 80°C until the theoretical NCO-content, corresponding to full conversion of isocyanate-reactive groups, was obtained and verified by titration. Then 170.5 g of carbonyl functional building block **A2** of **Example 1** and 106.0 g of methyl methacrylate (**MU1**) were rapidly added, in one shot, and the reaction mixture was held at the resulting temperature while stirring until all isocyanate groups had reacted (confirmed by titration). After addition of 42.0 g of N,N-dimethylethanolamine (**N**), the mixture was homogenized for 5 minutes at 75°C. 1400 g (preheated to 70°C) of de-ionized water were then added to the prepolymer solution, while stirring intensively during 30 minutes at 65°C. Subsequently, 102.0 g of an 1.9% aqueous solution of BRUGGOLITE^{®} FF6M was added at 65°C and homogenized for 10 minutes followed by the continuous addition, over 30 minutes, of 201.4 g of an 0.5% aqueous solution of tert-butyl hydroperoxide, while maintaining the temperature between 65 and 75°C by parallel cooling. Then the reaction mixture was held for another 30 minutes at a temperature comprised at 65°C for completing the polymerization and cooled down to room temperature (23°C). The dispersion thus obtained had the following characteristics: solid content: 42.8%; pH (10% aqueous solution): 7.8; dynamic viscosity (100 s⁻¹, 23°C): 1681 mPa.s; Z-average particle size (ISO 22412): 53 nm. The solid unneutralized polyurethane-vinyl polymer hybrid (A) is characterized by a weight average molecular weight (Mw) of 20,090 g/mole; a calculated carbonyl content of 414 mmole/kg; a calculated hydroxyl content of 552 mmole/kg; and a calculated acid content of 440 mmole/kg.

### Example 2a: Synthesis of aqueous dispersion comprising polyurethane-vinyl polymer hybrid A having pendant acid salt groups and end-standing carbonyl groups, and multifunctional compound B.

In a reactor purged with nitrogen 3113 g of the polyurethane-vinyl polymer hybrid dispersion of **Example 2** were heated to 30°C. 48.34 g adipic acid dihydrazide (**B**) was added and homogenized for 30 minutes. The polyurethane dispersion is characterized by a solid content of 43.3% by weight; a pH (10% aqueous solution) of 8.0; a Z-average particle size of 69 nm and a dynamic viscosity (25 s⁻¹, 23°C) of 27,545 mPa.s.

### Example 2b: Synthesis of aqueous dispersion comprising polyurethane-vinyl polymer hybrid A having pendant acid salt groups and end-standing carbonyl groups, vinyl polymer VP and multifunctional compound B.

To the reactor purged with nitrogen, comprising 3113 g of the polyurethane-vinyl polymer hybrid dispersion of **Example 2,** 880.0 g of deionized water were added. The resulting dispersion was heated to 60°C whereupon 490.0 g of methyl methacrylate (**MU2**) and 185.0 g of 2-ethylhexyl acrylate (**MU2**) were rapidly added, in one shot. The resulting mixture was homogenized for 30 minutes at 60°C. Subsequently, 208.0 g of a 3.8% aqueous solution of BRUGGOLITE^{®} FF6M was added and homogenized for 10 minutes at 60°C, followed by the continuous addition, over 30 minutes, of 253 g of a 0.5% aqueous solution of tert-butyl hydroperoxide. The reaction temperature was allowed to rise to 75°C while maintaining the temperature below 80°C by parallel cooling for 30 minutes. Then further 490.0 g of methyl methacrylate (**MU2**) and 185.0 g of 2-ethylhexyl acrylate (**MU2**) were rapidly added, in one shot, and the reaction mixture was homogenized for 30 minutes at 65°C. Subsequently the second portion of 253 g of a 0.5% aqueous solution of tert-butyl hydroperoxide was continuously added over 30 minutes allowing the temperature of the reaction mixture to rise to 75°C while maintaining the temperature below 80°C by parallel cooling. Once the addition of the tert-butyl hydroperoxide solution was finished the reaction media was cooled down to 65°C and maintained at this temperature for 1 hour. Subsequently the dispersion was further cooled down to 40°C, 48.34 g adipic acid dihydrazide (**B**) was added and homogenized for 30 minutes. The dispersion thus obtained had the following characteristics: solid content: 44.4%; pH (10% aqueous solution): 8.1; dynamic viscosity (100 s⁻¹, 23°C): 505 mPa.s; Z-average particle size (ISO 22412): 101 nm.

### Example 3: Synthesis of aqueous dispersion comprising polyurethane-vinyl polymer hybrid A having pendant acid salt groups and end-standing carbonyl groups

In a reactor purged with nitrogen, 276.75 g of a polyadipate of 1,6-hexanediol with number average molecular weight (Mn) of 1,000 g/mole and an hydroxyl number of 112 mg KOH/g (**ICP**), 92.25 g polycarbonate diol of 1,6-hexandiol with number average molecular weight (Mn)of 1,000 g/mole and a hydroxyl number of 112 mg KOH/g (**ICP**) and 79.00 g of dimethylolpropionic acid **(ICMA),** were heated to 130° C and the mixture was kept at this temperature until a homogeneous solution was formed. 117.9 g of isophorone diisocyanate **(I)** were then metered in over a period of 30 minutes, while stirring was continued at 130°C until no more free isocyanate groups could be detected. After cooling to 100°C, 1.05 g of 2,6-di-tert-butyl-4-methylphenol, 32.74 g of 1 ,4-butyleneglycol (**ICM**), 254.0 g of 2-ethylhexylacrylate (**MU1**) and 237.7 g of isophorone diisocyanate **(I),** were sequentially added. The components were reacted at 75 - 80°C until the theoretical NCO-content, corresponding to full conversion of isocyanate-reactive groups, was obtained and verified by titration. Then 170.5 g of carbonyl functional building block **A2** of **Example 1** and 106.0 g of methyl methacrylate (**MU1**) were rapidly added, in one shot, and the reaction mixture was held at the resulting temperature while stirring until all isocyanate groups had reacted (confirmed by titration). After addition of 42.0 g of N,N-dimethylethanolamine (**N**), the mixture was homogenized for 5 minutes at 75°C. 1400 g of de-ionized water were then added to the prepolymer solution, while stirring intensively during 30 minutes at 65°C. Subsequently, 102.0 g of an 1.9% aqueous solution of BRUGGOLITE^{®} FF6M was added at 65°C and homogenized for 10 minutes followed by the continuous addition, over 30 minutes, of 201.4 g of an 0.5% aqueous solution of tert-butyl hydroperoxide, while maintaining the temperature between 65 and 75°C by parallel cooling. Then the reaction mixture was held for another 30 minutes at a temperature comprised at 65°C for completing the polymerization and cooled down to room temperature (23°C). The dispersion thus obtained had the following characteristics: solid content: 43.1%; pH(10% aqueous solution): 8.0; dynamic viscosity (100 s⁻¹, 23°C): 368 mPa.s; Z-average particle size (ISO 22412): 47 nm. The solid unneutralized polyurethane-vinyl polymer hybrid (A) is characterized by a weight average molecular weight (Mw) of 328,700 g/mole; a calculated carbonyl content of 414 mmole/kg; a calculated hydroxyl content of 553 mmole/kg; and a calculated acid content of 440 mmole/kg.

### Example 3a: Synthesis of aqueous dispersion comprising polyurethane-vinyl polymer hybrid A having pendant acid salt groups and end-standing carbonyl groups, and multifunctional compound B.

In a reactor purged with nitrogen 3113 g of the polyurethane-vinyl polymer hybrid dispersion of **Example 3** were heated to 30°C. 48.35 g adipic acid dihydrazide (**B**) was added and homogenized for 30 minutes. The polyurethane dispersion is characterized by a solid content of 43.1% by weight; a pH (10% aqueous solution) of 8.1; a Z-average particle size of 49 nm and a dynamic viscosity (100 s⁻¹, 23°C) of 3823 mPa.s.

### Example 3b: Synthesis of aqueous dispersion comprising polyurethane-vinyl polymer hybrid A having pendant acid salt groups and end-standing carbonyl groups, vinyl polymer VP and multifunctional compound B.

To the reactor purged with nitrogen, comprising 3113 g of the polyurethane-vinyl polymer hybrid dispersion of **Example 3,** 880.0 g of deionized water were added. The resulting dispersion was heated to 60°C whereupon 490.0 g of methyl methacrylate (**MU2**) and 185.0 g of 2-ethylhexyl acrylate (**MU2**) were rapidly added, in one shot. The resulting mixture was homogenized for 30 minutes at 60°C. Subsequently, 208.0 g of a 3.8% aqueous solution of BRUGGOLITE^{®} FF6M was added and homogenized for 10 minutes at 60°C, followed by the continuous addition, over 30 minutes, of 253 g of a 0.5% aqueous solution of tert-butyl hydroperoxide. The reaction temperature was allowed to rise to 75°C while maintaining the temperature below 80°C by parallel cooling for 30 minutes. Then further 490.0 g of methyl methacrylate (**MU2**) and 185.0 g of 2-ethylhexyl acrylate (**MU2**) were rapidly added, in one shot, and the reaction mixture was homogenized for 30 minutes at 65°C. Subsequently the second portion of 253 g of a 0.5% aqueous solution of tert-butyl hydroperoxide was continuously added over 30 minutes allowing the temperature of the reaction mixture to rise to 75°C while maintaining the temperature below 80°C by parallel cooling. Once the addition of the tert-butyl hydroperoxide solution was finished the reaction media was cooled down to 65°C and maintained at this temperature for 1 hour. Subsequently the dispersion was further cooled down to 40°C, 48.34 g adipic acid dihydrazide (**B**) was added and homogenized for 30 minutes. The dispersion thus obtained had the following characteristics: solid content: 44.4%; pH (10% aqueous solution): 8.0; dynamic viscosity (100 s⁻¹, 23°C): 53 mPa.s; Z-average particle size (ISO 22412): 59 nm.

### Comparative Example 4: Synthesis of aqueous dispersion comprising polyurethane-vinyl polymer hybrid having pendant acid salt groups and carbonyl groups pending from the vinyl part (of the polyurethane-vinyl polymer hybrid)

In a reactor purged with nitrogen, 276.75 g of a polyadipate of 1,6-hexanediol with number average molecular weight (Mn) of 1,000 g/mole and an hydroxyl number of 112 mg KOH/g (**ICP**), 92.25 g polycarbonate diol of 1,6-hexandiol with number average molecular weight (Mn) of 1,000 g/mole and a hydroxyl number of 112 mg KOH/g (**ICP**) and 79.00 g of dimethylolpropionic acid **(ICMA),** were heated to 130° C and the mixture was kept at this temperature until a homogeneous solution was formed. 117.9 g of isophorone diisocyanate **(I)** were then metered in over a period of 30 minutes, while stirring was continued at 130°C until no more free isocyanate groups could be detected. After cooling to 100°C, 1.05 g of 2,6-di-tert-butyl-4-methylphenol, 15.5 g of 1,4-butyleneglycol **(ICM),** 17.0 g of glycerol monomethacrylate **(MUoh),** 254.0 g of 2-ethylhexylacrylate **(MU1)** and 237.7 g of isophorone diisocyanate **(I),** were sequentially added. The components were reacted at 75 - 80°C until the theoretical NCO-content, corresponding to full conversion of isocyanate-reactive groups, was obtained and verified by titration. Then 45.2 g ethanolamine were added and the reaction mixture was held at the resulting temperature while stirring until all isocyanate groups had reacted (confirmed by titration). After addition of 42.0 g of N,N-dimethylethanolamine **(N),** the mixture was homogenized for 5 minutes at 80°C. 1350 g of de-ionized water (preheated to 70°C) were then added to the prepolymer solution, while stirring intensively during 30 minutes at 75°C. Then 106.0 g diacetone acrylamide **(MU1)** were added and stirring was continued at 65°C for further 60 minutes. Subsequently, 102.0 g of an 1.9% aqueous solution of BRUGGOLITE^{®} FF6M was added at 65°C and homogenized for 10 minutes followed by the continuous addition, over 30 minutes, of 201.4 g of an 0.5% aqueous solution of tert-butyl hydroperoxide, while maintaining the temperature between 65 and 75°C by parallel cooling. Then the reaction mixture was held for another 30 minutes at a temperature comprised at 65°C for completing the polymerization and cooled down to room temperature (23°C). Further 209.0 g of de-ionized water were added for viscosity adjustment. The dispersion thus obtained had the following characteristics: solid content: 39.5%; pH (10% aqueous solution): 7.5; dynamic viscosity (100 s⁻¹, 23°C): 334 mPa.s; Z-average particle size (ISO 22412): 60 nm. The solid unneutralized polyurethane-vinyl polymer hybrid **(A)** is characterized by a weight average molecular weight (Mw) of 34,290 g/mole; a calculated carbonyl content of 503 mmole/kg; a calculated hydroxyl content of 594 mmole/kg; and a calculated acid content of 473 mmole/kg.

### Comparative Example 4a: Synthesis of aqueous dispersion comprising polyurethane-vinyl polymer hybrid having pendant acid salt groups and carbonyl groups pending from the vinyl part (of the polyurethane-vinyl polymer hybrid), and multifunctional compound B.

In a reactor purged with nitrogen 3147 g of the polyurethane-vinyl polymer hybrid dispersion of **Comparative Example 4** were heated to 30°C. 54.6 g adipic acid dihydrazide **(B)** was added and homogenized for 30 minutes. The polyurethane dispersion is characterized by a solid content of 40.9% by weight; a pH (10% aqueous solution) of 7.5; a Z-average particle size of 65 nm and a dynamic viscosity (100 s⁻¹, 23°C) of 577 mPa.s.

### Comparative Example 4b: Synthesis of aqueous dispersion comprising Polyurethane-vinyl polymer hybrid having pendant acid salt groups and carbonyl groups pending from the vinyl part (of the polyurethane-vinyl polymer hybrid), vinyl polymer VP and multifunctional compound B.

To the reactor purged with nitrogen, comprising 3147 g of the polyurethane-vinyl polymer hybrid dispersion of **Comparative Example 4,** 650.0 g of deionized water were added. The resulting dispersion was heated to 60°C whereupon 490.0 g of methyl methacrylate **(MU2)** and 185.0 g of 2-ethylhexyl acrylate **(MU2)** were rapidly added, in one shot. The resulting mixture was homogenized for 30 minutes at 60°C. Subsequently, 208.0 g of a 3.8% aqueous solution of BRUGGOLITE^{®} FF6M was added and homogenized for 10 minutes at 60°C, followed by the continuous addition, over 30 minutes, of 253 g of a 0.5% aqueous solution of tert-butyl hydroperoxide. The reaction temperature was allowed to rise to 75°C while maintaining the temperature below 80°C by parallel cooling for 30 minutes. Then further 490.0 g of methyl methacrylate **(MU2)** and 185.0 g of 2-ethylhexyl acrylate **(MU2)** were rapidly added, in one shot, and the reaction mixture was homogenized for 30 minutes at 65°C. Subsequently the second portion of 253 g of a 0.5% aqueous solution of tert-butyl hydroperoxide was continuously added over 30 minutes allowing the temperature of the reaction mixture to rise to 75°C while maintaining the temperature below 80°C by parallel cooling. Once the addition of the tert-butyl hydroperoxide solution was finished the reaction media was cooled down to 65°C and maintained at this temperature for 1 hour. Subsequently the dispersion was further cooled down to 40°C, 54.6 g adipic acid dihydrazide **(B)** was added and homogenized for 30 minutes. The dispersion thus obtained had the following characteristics: solid content: 44.8%; pH(10% aqueous solution): 7.5; dynamic viscosity (100 s-1, 23°C): 133 mPa.s; Z-average particle size (ISO 22412): 101 nm.

### Comparative Example 5: Synthesis of carbonyl functional diol building block.

In a reactor purged with nitrogen 235.7 g (2.0 moles) levulinic acid and 0.53 g triphenyl phosphine were charged and heated to 70°C. Then 202.3 g (1.0 mole) of butanediol diglycidyl ether were added to the reactor within 30 minutes while stirring. Then the temperature was raised to 120°C and maintained until full conversion of glycidyl groups was obtained (verified by titration, less than 0.02 mmole glycidyl groups per gram of reaction mass). The reaction product was then cooled to ambient temperature and used as crude product without further purification. The carbonyl functional diol building block was characterized by a calculated carbonyl content of 4.5607 mmole/g and a calculated hydroxyl content of 4.5607 mmole/g.

### Comparative Example 6: Synthesis of aqueous dispersion comprising polyurethane-vinyl polymer hybrid having pendant acid salt groups and carbonyl groups pending from the polyurethane prepolymer backbone.

In a reactor purged with nitrogen, 171.7 g of a polyadipate of 1,6-hexanediol with number average molecular weight (Mn) of 1,000 g/mole and an hydroxyl number of 112 mg KOH/g **(ICP),** 45.67 g carbonyl functional diol building block of **Comparative Example 5,** 92.25 g polycarbonate diol of 1,6-hexandiol with number Average Molecular weight of 1,000 g/mole and a hydroxyl number of 112 mg KOH/g **(ICP)** and 79.00 g of dimethylolpropionic acid **(ICMA),** were heated to 130° C and the mixture was kept at this temperature until a homogeneous solution was formed. 117.9 g of isophorone diisocyanate **(I)** were then metered in over a period of 30 minutes, while stirring was continued at 130°C until no more free isocyanate groups could be detected. After cooling to 100°C, 1.05 g of 2,6-di-tert-butyl-4-methylphenol, further 74.91 g carbonyl functional diol building block of **Comparative Example 5,** 17.0 g of glycerol monomethacrylate **(MUoh),** 254.0 g of 2-ethylhexylacrylate **(MU1),** 106.0 g of methyl methacrylate **(MU1)** and 237.7 g of isophorone diisocyanate **(I),** were sequentially added. The components were reacted at 75 - 80°C until the theoretical NCO-content, corresponding to full conversion of isocyanate-reactive groups, was obtained and verified by titration. Then 38.25 g ethanolamine were added and the reaction mixture was held at the resulting temperature while stirring until all isocyanate groups had reacted (confirmed by titration). After addition of 42.0 g of N,N-dimethylethanolamine **(N),** the mixture was homogenized for 5 minutes at 80°C. 1808 g of de-ionized water (preheated to 70°C) were then added to the prepolymer solution, while stirring intensively during 30 minutes at 75°C. Subsequently, 102.0 g of an 1.9% aqueous solution of BRUGGOLITE^{®} FF6M and further 128 g de-ionized water were added at 65°C and homogenized for 10 minutes followed by the continuous addition, over 30 minutes, of 201.4 g of an 0.5% aqueous solution of tert-butyl hydroperoxide, while maintaining the temperature between 65 and 75°C by parallel cooling. Then the reaction mixture was held for another 30 minutes at a temperature comprised at 65°C for completing the polymerization and cooled down to room temperature (23°C). The dispersion thus obtained had a solid content of 33.5%. The solid unneutralized polyurethane-vinyl polymer hybrid is characterized by a weight average molecular weight (Mw) of 11,940 g/mole; a calculated carbonyl content of 445 mmole/kg; a calculated hydroxyl content of 506 mmole/kg; and a calculated acid content of 476 mmole/kg.

### Comparative Example 6a: Synthesis of aqueous dispersion comprising polyurethane-vinyl polymer hybrid having pendant acid salt groups and carbonyl groups pending from the polyurethane part, and multifunctional compound B.

In a reactor purged with nitrogen 3694 g of the polyurethane-vinyl polymer hybrid dispersion of **Comparative Example 6** were heated to 30°C. 47.5 g adipic acid dihydrazide **(B)** was added and homogenized for 30 minutes. The polyurethane dispersion is characterized by a solid content of 34.8% by weight; a pH (10% aqueous solution) of 6.8; a Z-average particle size of 195 nm and a dynamic viscosity (100 s⁻¹, 23°C) of 1850 mPa.s.

### Comparative Example 6b: Synthesis of aqueous dispersion comprising Polyurethane-vinyl polymer hybrid having pendant acid salt groups and carbonyl groups pending from the polyurethane part, vinyl polymer VP and multifunctional compound B.

To the reactor purged with nitrogen, comprising 3694 g of the polyurethane-vinyl polymer hybrid dispersion of **Comparative Example 6,** 800.0 g of deionized water were added. The resulting dispersion was heated to 60°C whereupon 490.0 g of methyl methacrylate **(MU2)** and 185.0 g of 2-ethylhexyl acrylate **(MU2)** were rapidly added, in one shot. The resulting mixture was homogenized for 30 minutes at 60°C. Subsequently, 208.0 g of a 3.8% aqueous solution of BRUGGOLITE^{®} FF6M was added and homogenized for 10 minutes at 60°C, followed by the continuous addition, over 30 minutes, of 253 g of a 0.5% aqueous solution of tert-butyl hydroperoxide, during which a drastic viscosity increase and very significant coagulum formation was observed. Finally, the reaction needed to be aborted due to complete coagulation of the reaction product.

### Example 7: Synthesis of aqueous dispersion comprising polyurethane-vinyl polymer hybrid A having pendant acid salt groups and end-standing carbonyl groups.

The aqueous dispersion was made as described in **Example 2,** wherein 42.0 g of N,N-dimethylethanolamine were replaced by 43.2 g of an aqueous solution of 25% by weight of ammonia **(N).** The dispersion thus obtained had the following characteristics: solid content: 43.0%; pH (10% aqueous solution): 7.6; dynamic viscosity (100 s⁻¹, 23°C): 2295 mPa.s; Z-average particle size (ISO 22412): 53 nm.

### Example 7a: Synthesis of aqueous dispersion comprising polyurethane-vinyl polymer hybrid A having pendant acid salt groups and end-standing carbonyl groups, and multifunctional compound B.

In a reactor purged with nitrogen 3115 g of the polyurethane-vinyl polymer hybrid dispersion of **Example 7** were heated to 30°C. 48.34 g adipic acid dihydrazide **(B)** was added and homogenized for 30 minutes.

### Example 7b: Synthesis of aqueous dispersion comprising polyurethane-vinyl polymer hybrid A having pendant acid salt groups and end-standing carbonyl groups, vinyl polymer VP and multifunctional compound B.

The aqueous dispersion was made as described in **Example 2b,** wherein 3113 g of the polyurethane-vinyl polymer hybrid dispersion of **Example 2** were replaced by 3115 g of the polyurethane-vinyl polymer hybrid dispersion of **Example 7.** The dispersion thus obtained had the following characteristics: solid content: 45.0%; pH (10% aqueous solution): 8.3; dynamic viscosity (100 s⁻¹, 23°C): 167 mPa.s; Z-average particle size (ISO 22412): 105 nm.

### Coating application, Test results

The aqueous dispersions as described in **Examples 2a, 2b, 3a and 3b** as well as in **Comparative Examples 4a, 4b and 6a** were applied as such to test substrates without further formulating. Test results are presented in **Table 1.** Coating evaluation is based on the following tests:
- Film formation: The aqueous dispersions were applied to glass panels in a wet film thickness of 100 µm with a wire-rod applicator and placed into a refrigerator at 4°C. The applied film was examined for surface defects and cracking after 16 hours using a magnifying glass with a magnification of 5x and reported according to a rating system (0 - 5, 0 meaning "very poor", 5 meaning "perfect").
- Early water resistance: The aqueous dispersions were applied to a test chart (Opacity Display Chart) in a wet film thickness of 150 µm with a wire-rod applicator and cured for 24 hours at 23°C and 55% relative humidity. Thereafter, a cotton wool wad infused with demineralized water was placed onto the coating surface and left there for 1 hour. After removal of the cotton wool wad the coating surface was examined immediately and after 24 hours of regeneration. Defects and whitening of the coating surface was examined by visual inspection and reported according to a rating system (0 - 5, 0 meaning "severe damage", 5 meaning "no damage / whitening").

- Blocking resistance: The aqueous dispersions were applied to test chart (Opacity Display Chart) in a wet film thickness of 150 µm with a wire-rod applicator and cured for 25 minutes at 23°C followed by 30 minutes at 50°C. Thereafter, two 2.8 cm wide stripes each were cut from the same coated test chart and placed with the coated surfaces together perpendicular to each other making 1 pair. The test pairs were put one at the other on a stack and a load of 1 kg/cm² was applied over 4 hours at a temperature of 50°C. Thereafter, the load was removed and after acclimatization for one hour at 23°C and 55% relative humidity the test stripes of each pair were pulled apart from each other in opposite directions and given a rating according to ASTM D4946-89 (from 10 "perfect" to 0 "very poor").
- Gloss: The aqueous dispersions were applied to black test chart (Opacity Display Chart) in a wet film thickness of 150 µm with a wire-rod applicator and cured for 24 hours at 23°C and 55% relative humidity. Gloss levels were measured using a micro-TRI-gloss instrument obtained from BYK Gardner GmbH and expressed in gloss units [GU] for an angle of 20° and 60° respectively according to DIN EN ISO 2813.

As appears from the comparison in **Table 1,** application of the new aqueous polyurethane-vinyl polymer hybrid dispersion according to the present invention on the substrates tested, unexpectedly results in significantly improved blocking resistance while maintaining good gloss and film formation. Unexpectedly, Examples 2a and 2b (representing the preferred embodiment of the invention where at least one of the monomeric compounds **ICM** is an isocyanate-reactive monomer, **MUoh)** even results in significantly improved early water resistance.

**Table 1**

| **Aqueous dispersion** | **Ex. 2a** | **Ex. 2b** | **Ex. 3a** | **Ex. 3b** | **Com. Ex. 4a** | **Com. Ex. 4b** | **Com. Ex. 6a** |
|---|---|---|---|---|---|---|---|
| Film formation at 4°C | 5 | 5 | 5 | 5 | 5 | 5 | 5 |
| Gloss, 20° / 60° | 73 / 88 | 74 / 87 | 77 / 86 | 74 / 85 | 74 / 88 | 72 / 87 | 72 / 88 |
| Blocking resistance | 8 | 8 | 8 | 8 | 0 | 0 | 0 |
| Early water resistance* | 2 / 2 | 2 / 3 | 0 / 0 | 0 / 0 | 0 / 0 | 0 / 0 | 0 / 0 |

| | | | | | | | |
|---|---|---|---|---|---|---|---|
| * examined immediately I after 24 hours | | | | | | | |

## Claims

1. An aqueous polyurethane-vinyl polymer hybrid dispersion **D** comprising:
- a polyurethane-vinyl polymer hybrid **A** having pendant acid salt groups and end-standing carbonyl groups, and
- optionally a multifunctional compound **B** having functional groups reactable with the carbonyl groups of polyurethane-vinyl polymer hybrid **A,**
wherein
said polyurethane-vinyl polymer hybrid **A,** in its solid unneutralized form, is **characterized by** a carbonyl content of more than 150 mmole/kg; and
said polyurethane-vinyl polymer hybrid **A** is the reaction product of:
- an isocyanate functional polyurethane prepolymer **A1** comprising acid groups; and
- from 50 to 100 moles of a carbonyl functional building block **A2,** for 100 isocyanate equivalents of the isocyanate functional polyurethane prepolymer **A1;** and
- from 0 to 50 moles of a primary amine **A22,** for 100 isocyanate equivalents of the isocyanate functional polyurethane prepolymer **A1,** said primary amine **A22** being selected from the group consisting of alkylamines, alkanol amines and mixtures thereof; and
- one or more ethylenically unsaturated monomer(s) **MU1** having at least one polymerisable ethylenic unsaturation; and
- one or more acid neutralizing compound(s) **N;**
wherein said carbonyl functional building block **A2** is bound at the extremity of the isocyanate functional polyurethane prepolymer **A1.**

2. The aqueous polyurethane-vinyl polymer hybrid dispersion **D** according to claim 1, further comprising a vinyl polymer **VP,**
said vinyl polymer **VP** being the reaction product of one or more ethylenically unsaturated monomer(s) **MU2** having at least one polymerisable ethylenic unsaturation,
the **MU2** being polymerized in the presence of the polyurethane-vinyl polymer hybrid **A.**

3. The aqueous polyurethane-vinyl polymer hybrid dispersion **D** according to claim 1 or 2, wherein said carbonyl functional building block **A2** contains at least one group which is reactive towards isocyanate, and at least one carbonyl group of the ketone and/or aldehyde type.

4. The aqueous polyurethane-vinyl polymer hybrid dispersion **D** according to any of claims 1 to 3, wherein the carbonyl functional building block **A2** is the Michael addition reaction product of:
- an alpha, beta ethylenically unsaturated group comprising compound comprising a carbonyl group **A21,** said alpha, beta ethylenically unsaturated group comprising compound comprising a carbonyl group **A21** being selected from the group consisting of acrolein, methacrolein, diacetone-acrylamide, 2-acetoacetoxyethyl (meth)acrylate, crotonaldehyde, 4-vinylbenzaldehyde, vinyl alkyl ketones of 4 to 7 carbon atoms such as vinyl methyl ketone, and acryloxy- and methacryloxy-alkyl propanols of formula CH₂=CHR³-C=O-O-CHR⁴-CR⁵R⁶-C=O-H, where R³ is H or methyl, R⁴ is H or alkyl of 1 to 3 carbon atoms, R⁵ is alkyl of 1 to 3 carbon atoms, and R⁶ is alkyl of 1 to 4 carbon atoms; and
- a primary amine **A22** selected from the group consisting of C1-C6 alkylamines, C1-C6 alkanolamines and mixtures thereof.

5. The aqueous polyurethane-vinyl polymer hybrid dispersion **D** according to any of claims 1 to 4, wherein multifunctional compound **B** is present and is selected from the group consisting of polyhydrazides, polyhydrazones and mixtures thereof.

6. The aqueous polyurethane-vinyl polymer hybrid dispersion **D** according to any of claims 1 to 5, wherein the multifunctional compound **B** is present and is the reaction product of hydrazine and a polycarboxylic acid.

7. The aqueous polyurethane-vinyl polymer hybrid dispersion **D** according to any of claims 1 to 6, wherein the multifunctional compound **B** is present and is selected from the group consisting of oxalic acid dihydrazide, malonic acid dihydrazide, succinic acid dihydrazide, glutaric acid dihydrazide, adipic acid dihydrazide, cyclohexane dicarboxylic acid dihydrazide, azelaic acid dihydrazide, sebacic acid dihydrazide and mixtures thereof.

8. The aqueous polyurethane-vinyl polymer hybrid dispersion **D** according to any of claims 1 to 7, wherein the multifunctional compound **B** is present and is adipic acid dihydrazide.

9. The aqueous polyurethane-vinyl polymer hybrid dispersion **D** according to any of claims 1 to 8, wherein the isocyanate functional polyurethane prepolymer **A1** is the reaction product of:
- one or more polyisocyanate(s) **I**;
- one or more isocyanate reactive compound(s) **IC** having at least two isocyanate reactive groups selected from the group consisting of monomeric compounds **ICM,** polymeric compounds **ICP** and mixtures thereof; and
- one or more isocyanate reactive monomer(s) **ICMA** having at least two isocyanate reactive groups and at least one acid group or group being able to form an acid when contacted with water;
wherein isocyanate groups of **I** are in stoichiometric excess of isocyanate reactive groups of **IC** and **ICMA.**

10. The aqueous polyurethane-vinyl polymer hybrid dispersion **D** according to any of claims 1 to 9, wherein at least one of the monomeric compounds **ICM** is a isocyanate reactive monomer, **MUoh,** having at least two isocyanate reactive groups and an ethylenically unsaturated group.

11. The aqueous polyurethane-vinyl polymer hybrid dispersion **D** according to claim 10, wherein the isocyanate reactive monomer **MUoh** is selected from the group consisting of glycerol mono(meth)acrylate, trimethylolpropane mono(meth)acrylate and mixtures thereof.

12. The aqueous polyurethane-vinyl polymer hybrid dispersion **D** according to any of claims 1 to 11, wherein the one or more acid neutralizing compound(s) **N** is (are) selected from the group consisting of primary, secondary and tertiary amines, and strong Arrhenius bases such as the hydroxides of alkali metals and alkaline earth alkali metals, and mixtures thereof.

13. The aqueous polyurethane-vinyl polymer hybrid dispersion **D** according to any of claims 1 to 12, wherein the one or more ethylenically unsaturated monomer(s) **MU1** and/or **MU2** is (are) selected from the group consisting of alkyl (meth)acrylates, hydroxy-functional (meth)acrylates, epoxy-functional (meth)acrylates, keto-functional ethylenically unsaturated monomers, (meth)acrylamides, vinyl monomers and mixtures thereof; the alkyl(meth)acrylate being an ester of (meth)acrylic acid with aliphatic linear, branched or cyclic mono-alcohols having from one to twelve carbon atoms in the alkyl group.

14. The aqueous polyurethane-vinyl polymer hybrid dispersion **D** according to any of claims 1 to 13, wherein the one or more ethylenically unsaturated monomers **MU1** and/or **MU2** comprise up to 10% by weight, of the total amount of ethylenically unsaturated monomers, of poly-ethylenically unsaturated monomers.

15. The aqueous polyurethane-vinyl polymer hybrid dispersion **D** according to any of claims 1 to 14, wherein the one or more ethylenically unsaturated monomers **MU1** and/or **MU2** comprise up to 30% by weight, of the total amount of ethylenically unsaturated monomers, of keto-functional ethylenically unsaturated monomers selected from the group consisting of keto-functional (meth)acrylates and keto-functional (meth)acryl amides and mixtures thereof.

16. Method for the preparation of the aqueous polyurethane-vinyl polymer hybrid dispersion **D** according to claim 1 to 15, comprising the steps of;
a) mixing one or more isocyanate reactive compound(s) **IC** having at least two isocyanate reactive groups with one or more isocyanate reactive monomers **ICMA** having at least two isocyanate reactive groups and at least one acid group or group being able to form an acid when contacted with water, and heating the mixture to a temperature of at least 60°C for at least 10 minutes under stirring;
b) continuously adding a sub-stoichiometric quantity of one or more polyisocyanate(s) **I** to the mixture of step a), over a time period of from ten minutes to eighty minutes while keeping the temperature in a range of from 60 °C to 150 °C, to form a hydroxyl-functional polyurethane prepolymer;
c) adding one or more monomeric compound(s) **ICM** having at least two isocyanate reactive groups, and optionally one or more isocyanate reactive monomer(s) **MUoh** having at least two isocyanate reactive groups and an ethylenically unsaturated group, and preferably one or more ethylenically unsaturated monomer(s) **MU1,** to the hydroxyl-functional polyurethane prepolymer of step b), and homogenizing the mixture, optionally in the presence of an antioxidant or radical scavenger;
d) adding a further amount of polyisocyanate **I,** while stirring at a temperature in the range of from 60°C to 100°C, to the homogenized mixture of step c) in stoichiometric excess, thereby forming an isocyanate functional polyurethane prepolymer **A1;**
e) adding, in one shot, a mixture of compound **A2,** preferably one or more ethylenically unsaturated monomer(s) **MU1,** and optionally one or more primary amine(s) **A22** and optionally water, to the isocyanate-functional polyurethane prepolymer **A1** of step d) standing at a temperature comprised between 70°C and 95°C, and homogenizing for at least 10 minutes at the resulting temperature, to convert the isocyanate-functional polyurethane prepolymer **A1** into a polyurethane comprising end-standing carbonyl groups;
f) adding, in one shot, one or more acid neutralizing compound(s) **N** to the polyurethane of step e) comprising acid groups and carbonyl groups, and homogenizing for at least 5 minutes, to convert the acid groups into the corresponding salt, resulting in a polyurethane comprising pendant acid salt groups and end-standing carbonyl groups;
g) adding water to the homogenized mixture of step f), thereby forming an emulsion;
h) homogenizing the emulsion of step g) at a temperature in the range of from 40°C to 80°C for at least 10 minutes;
i) redox-polymerizing the homogenized emulsion of step h) by gradually adding at least one of the redox system components over at least 10 minutes while maintaining the temperature in the range of from 60°C to 80°C, thereby forming the polymerization mixture;
j) maintaining the temperature of the polymerization mixture at a temperature comprised between 65°C and 85°C for at least 15 minutes, for further polymerizing, thereby forming the aqueous dispersion **D** of polyurethane-vinyl polymer hybrids **A** having pendant acid salt groups and end-standing carbonyl groups; and
k) cooling down the aqueous dispersion **D** of polyurethane-vinyl polymer hybrids **A** of step j) to a temperature below 40°C and optionally adding multifunctional compound **B** thereto.

17. The method according to claim 16 comprising the additional steps of:
I) fast adding a mixture of ethylenically unsaturated monomers **MU2** to the aqueous dispersion **D** of polyurethane-vinyl polymer hybrids **A** having pendant acid salt groups and end-standing carbonyl groups of step j) and homogenizing the mixture at a temperature in the range of from 40°C to 80°C during at least 10 minutes;
m) redox-polymerizing the homogenized emulsion of step l) by gradually adding at least one of the redox system components over at least 10 minutes while maintaining the temperature in the range of from 60°C to 80°C, thereby forming the polymerization mixture;
n) maintaining the temperature in the range of from 60°C to 80°C for at least 15 minutes to finalize the polymerization, thereby forming the aqueous polyurethane-vinyl polymer hybrid dispersion **D,** further comprising a first vinyl polymer **VP1;** and
o) cooling down the aqueous polyurethane-vinyl polymer hybrid dispersion **D,** further comprising a first vinyl polymer **VP1** of step n) to a temperature below 40°C and optionally adding multifunctional compound **B** thereto.

18. The method according to claim 17 comprising the additional steps of:
p) fast adding a mixture of ethylenically unsaturated monomers **MU2** to the aqueous polyurethane-vinyl polymer hybrid dispersion **D,** further comprising a first vinyl polymer **VP1** of step n) and homogenizing the mixture at a temperature in the range of from 40°C to 80°C during at least 10 minutes;
q) redox-polymerizing the homogenized emulsion of step p) by gradually adding at least one of the redox system components over at least 10 minutes while maintaining the temperature in the range of from 60°C to 80°C, thereby forming the polymerization mixture;
r) maintaining the temperature in the range of from 60°C to 80°C for at least 15 minutes to finalize the polymerization, thereby forming the aqueous polyurethane-vinyl polymer hybrid dispersion **D,** further comprising first vinyl polymer **VP1** and second vinyl polymer **VP2;** and
s) cooling down the aqueous polyurethane-vinyl polymer hybrid dispersion **D,** further comprising first vinyl polymer **VP1** and second vinyl polymer **VP2** of step r) to a temperature below 40°C and optionally adding multifunctional compound **B** thereto.

19. A coating composition comprising the aqueous polyurethane-vinyl polymer hybrid dispersion **D** according to any of claims 1 to 15 and one or more additive(s) selected from the group consisting of defoamers, levelling agents, UV-absorbers, coalescing agents, flow modifiers, rheology additives, crosslinkers, fillers, pigments, active pigments and wetting agents.

20. Use of the coating composition according to claim 19, for coating a substrate selected from the group consisting of wood, engineered wood, metal, glass, cloth, composites, concrete, ceramics, leather, paper, plastics and foam.

21. A substrate selected from the group consisting of wood, engineered wood, metal, glass, cloth, composites, concrete, ceramics, leather, paper, cardboard, plastics and foam, preferably wood, coated with the coating composition according to claim 19.
